(19) Europäisches Patentamt / European Patent Office / Office européen des brevets

(11) **EP 4 640 788 A1**

(12) **EUROPEAN PATENT APPLICATION**
published in accordance with Art. 153(4) EPC

(43) Date of publication:
**29.10.2025   Bulletin 2025/44**

(21) Application number: **23912333.4**

(22) Date of filing: **28.12.2023**

(51) International Patent Classification (IPC):
**C09K 5/04** (2006.01)     **F25B 1/00** (2006.01)

(52) Cooperative Patent Classification (CPC):
**C09K 5/04; F25B 1/00**

(86) International application number:
**PCT/JP2023/047346**

(87) International publication number:
**WO 2024/143556 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.12.2022   JP 2022212599**

(71) Applicant: **Daikin Industries, Ltd.
Osaka-shi, Osaka 530-0001 (JP)**

(72) Inventors:
• **ITANO, Mitsushi
  Osaka-Shi, Osaka 530-0001 (JP)**

• **GOTO, Tomoyuki
  Osaka-Shi, Osaka 530-0001 (JP)**
• **YOSHIMURA, Takashi
  Osaka-Shi, Osaka 530-0001 (JP)**
• **USUI, Takashi
  Osaka-Shi, Osaka 530-0001 (JP)**
• **NAKAUE, Tsubasa
  Osaka-Shi, Osaka 530-0001 (JP)**

(74) Representative: **Hoffmann Eitle
Patent- und Rechtsanwälte PartmbB
Arabellastraße 30
81925 München (DE)**

(54) **REFRIGERANT-CONTAINING COMPOSITION, USE OF SAME, REFRIGERATOR COMPRISING SAME, AND METHOD FOR OPERATING REFRIGERATOR**

(57)     The problem to be solved is to provide a novel low-GWP mixed refrigerant. The means for solving the problem is to provide a composition containing a refrigerant, wherein the refrigerant contains trans-1,2-difluoroethylene (HFO-1132(E)), 1,1-difluoroethane (HFC-152a), and 1,1-difluoroethylene (HFO-1132a).

Fig. 2

EP 4 640 788 A1

**Description**

Technical Field

The present disclosure relates to a composition comprising a refrigerant, use of the composition, and a refrigerating machine having the composition and a method for operating the refrigerating machine.

Background Art

A working medium for thermal cycling that contains trifluoroethylene (HFO-1123) and 1,2-difluoroethylene (HFO-1132)has been proposed as a working medium for thermal cycling that can replace R410A (PTL 1).

Citation List

Patent Literature

PTL 1: WO2015/141678

Summary of Invention

Technical Problem

An object of the present disclosure is to provide a novel low-GWP mixed refrigerant.

Solution to Problem

Item 1.

A composition comprising a refrigerant,
wherein the refrigerant comprises trans-1,2-difluoroethylene (HFO-1132(E)), 1,1-difluoroethane (HFC-152a), and 1,1-difluoroethylene (HFO-1132a).

Item 2.

The composition according to Item 1,

wherein the refrigerant optionally further comprises R32,
when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 5.9$, within the range of a figure surrounded by straight lines CD, DO, OB, BA, and AC that connect the following 5 points:

point C (-a+60.0, 40.0, 0.0),
point D (-a+57.0, 0.0, 43.0),
point 0 (0.0, 0.0, -a+100),
point B (0.0, $0.006a^2$+0.185a+32.00, $-0.006a^2$-1.185a+68.00), and
point A (-a+40.8, 59.2, 0.0), or

on the straight lines CD, DO, and BA (excluding the points C, O, B, and A), and
the coordinates (x,y,z) are, when $5.9 < a \leq 10.0$, within the range of a figure surrounded by straight lines CD, DO, OB, BA, and AC that connect the following 5 points:

point C (-a+60.0, 40.0, 0.0),
point D (-a+57.0, 0.0, 43.0),
point O (0.0, 0.0, -a+100),
point B (0.0, $-0.0019a^2$+0.225a+32.038, $0.00192a^2$-1.225a+67.962), and
point A (-a+40.8, 59.2, 0.0), or

on the straight lines CD, DO, and BA (excluding the points C, O, B, and A) .

Item 3.

The composition according to Item 1,

wherein when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 5.9$, within the range of a figure surrounded by straight lines CD, DE, EE', E'F, FB, BA and AC that connect the following 7 points:

point C (-a+60.0, 40.0, 0.0)
point D (-a+57.0, 0.0, 43.0),
point E ($-0.0152a^2$-2.4021a+50.70, 0.0, $0.00152a^2$+1.4021a+49.30),
point E' ($-0.0082a^2$-2.0196a+12.2, $0.0008a^2$-0.242a+34.7, $0.0074a^2$+1.2616a+53.1),
point F (0.0, $-0.007a^2$-2.3826a+47.6, $0.007a^2$+1.3826a+52.4),
point B (0.0, $0.006a^2$+0.185a+32.00, $-0.006a^2$-1.185a+68.00), and
point A (-a+40.8, 59.2, 0.0), or

on the straight lines CD, DE, EE', E'F, and BA (excluding the points C, F, B, and A), and
the coordinates (x,y,z) are, when $5.9 < a \leq 10.0$, within the range of a figure surrounded by straight lines CD, DE, EF, FB, BA and AC that connect the following 6 points:

point C (-a+60.0, 40.0, 0.0)
point D (-a+57.0, 0.0, 43.0),
point E ($-0.0131a^2$-2.4253a+50.767, 0.0, $0.0131a^2$+1.4253a+49.233),
point F (0.0, $0.0081a^2$-2.6415a+48.602, $- 0.0081a^2$+1.6415a+51.398),
point B (0.0, $-0.0019a^2$+0.225a+32.038, $0.0019a^2$-1.225a+67.962), and
point A (-a+40.8, 59.2, 0.0), or

on the straight lines CD, DE, EF, and BA (excluding the points C, F, B, and A).

Item 4. The composition according to Item 1,

wherein when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 5.9$, within the range of a figure surrounded by straight lines CD, DE, EE', E'A', and A'C that connect the following 5 points:

point C (-a+60.0, 40.0, 0.0),
point D (-a+57.0, 0.0, 43.0),
point E ($-0.0152a^2$-2.4021a+50.70, 0.0, $0.00152a^2$+1.4021a+49.30),
point E' ($-0.0082a^2$-2.0196a+12.2, $0.0008a^2$-0.242a+34.7, $0.0074a^2$+1.2616a+53.1), and
point A' (-a+55.6, 44.4, 0.0), or

on the straight lines CD, DE, EE', and E'A' (excluding the points C and A'), and
the coordinates (x,y,z) are, when $5.9 < a \leq 10.0$, within the range of a figure surrounded by straight lines CD, DE, EF, FB', B'A', and A'C that connect the following 6 points:

point C (-a+60.0, 40.0, 0.0),
point D (-a+57.0, 0.0, 43.0),
point E ($-0.0131a^2$-2.4253a+50.767, 0.0, $0.00131a^2$+1.4253a+49.233),
point F (0.0, $0.0081a^2$-2.6415a+48.602, $- 0.0081a^2$+1.6415a+51.398),
point B' (0.0, $-0.0137a^2$+0.4304a+31.164, $0.0137a^2$-1.4304a+68.836), and
point A' (-a+55.6, 44.4, 0.0), or

on the straight lines CD, DE, EF, and B'A' (excluding the points C, F, B', and A').

Item 5.

The composition according to Item 1,

wherein the refrigerant further comprises R32, and
when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 1.6$, within the range of a figure surrounded by straight lines D'D, DJ, JK, and KD' that connect the following 4 points:

point D' (-a+58.3, 17.7, 24.0),
point D (-a+57.0, 0.0, 43.0),
point J (-17.625a+28.2, 3.1875a, 13.438a+71.8), and
point K (-10.625a+19.2, 5.625a+9.0, 15.25a+71.8), or

on the straight lines D'D, DJ, JK, and KD', and
the coordinates (x,y,z) are, when $1.6 < a \leq 1.7$, within the range of a figure surrounded by straight lines D'D, DJ, JK, and KD' that connect the following 4 points:

point D' (-a+58.3, 17.7, 24.0),
point D (-a+57.0, 0.0, 43.0),
point J (-17.625a+28.2, 3.1875a, 13.438a+71.8), and
point K (-22.0a+37.4, 0.0, 21.0a+62.6), or

on the straight lines D'D, DJ, JK, and KD', and
the coordinates (x,y,z) are, when $1.7 < a \leq 10.0$, within the range of a figure surrounded by straight lines D'D, DO, OB", and B"D' that connect the following 4 points:

point D' (-a+58.3, 17.7, 24.0),
point D (-a+57.0, 0.0, 43.0),
point 0 (0.0, 0.0, -a+100.0), and
point B" (0.0, $-0.0014a^2-0.2396a+4.657$, $0.0014a^2-1.2396a+95.343$), or

on the straight lines D'D, DO, and B"D' (excluding the points O and B").

Item 6.

The composition according to Item 1,

wherein the refrigerant further comprises HFO-1132a, and
when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%, coordinates (x,y,z) are, when $0 < a \leq 5.9$, within the range of a figure surrounded by straight lines D'D, DL, LM, and MD' that connect the following 4 points:

point D' (-a+58.3, 17.7, 24.0),
point D' (-a+57.0, 0.0, 43.0),
point L (-1.6619a+16.92, -0.1522a+8.4929, 0.8141a+74.587), and
point M ($0.0046a^2-1.8915a+25.9$, 0.0, $-0.0462a^2+0.8915a+74.1$), or

on the straight lines D'D, DL, LM, and MD', and
the coordinates (x,y,z) are, when $5.9 < a \leq 10.0$, within the range of a figure surrounded by straight lines D'D, DL, LM, and MD' that connect the following 4 points:

point D' (-a+58.3, 17.7, 24.0),

point D (-a+57.0, 0.0, 43.0),
point L (0.0219a$^2$-1.9578a+17.889, -0.005a$^2$-0.0668a+8.1682, -0.0169a$^2$+1.0246a+73.943), and
point M (0.0075a$^2$-1.8998a+25.848, 0.0, - 0.0075a$^2$+0.8998a+74.152), or

on the straight lines D'D, DL, LM, and MD'.

Item 7.

A refrigeration method comprising a step of operating a refrigeration cycle using the composition according to any one of Items 1 to 6.

Item **8.**

A refrigeration apparatus comprising the composition according to any one of Items 1 to 6 as a working fluid.

Item **9.**

A method for suppressing a disproportionation reaction of HFO-1132(E), comprising a step of operating a refrigeration cycle using the composition according to any one of Items 1 to **6.**

Item 10.

Use of HFO-1123, R32, R152a, and HFO-1132a for suppressing a disproportionation reaction of HFO-1132(E), wherein the suppression of the disproportionation reaction is carried out by mixing HFO-1123, R32, R152a, HFO-1132a, and HFO-1132(E) at a mixing ratio of the composition according to any one of Items 1 to 6.

Advantageous Effects of Invention

The refrigerant of the present disclosure has a low GWP.

Brief Description of Drawings

Fig. 1 is a ternary diagram showing formulations of the refrigerant of the present disclosure.

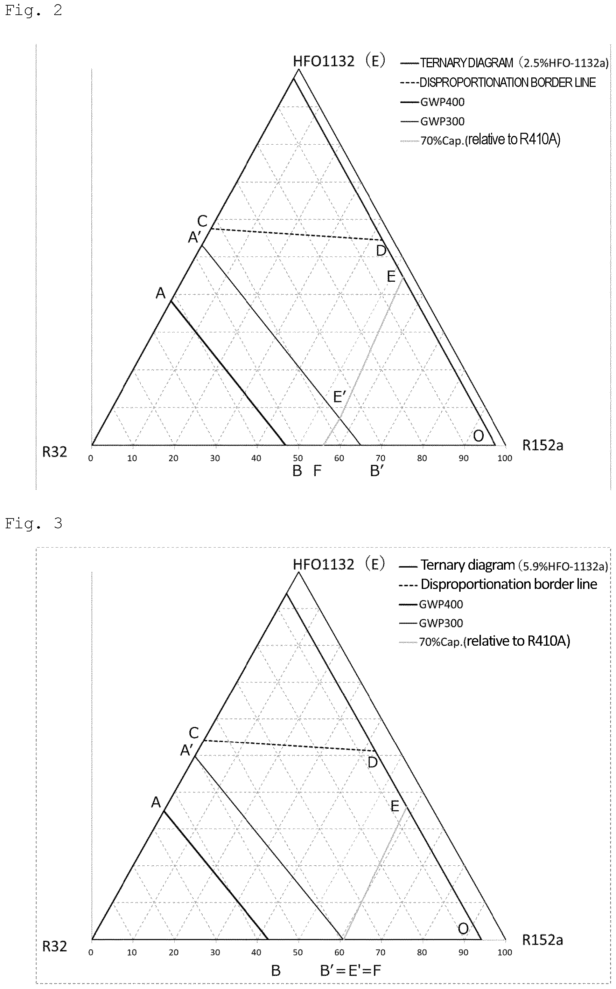

Fig. 2 is a ternary diagram showing formulations of the refrigerant of the present disclosure.
Fig. 3 is a ternary diagram showing formulations of the refrigerant of the present disclosure.

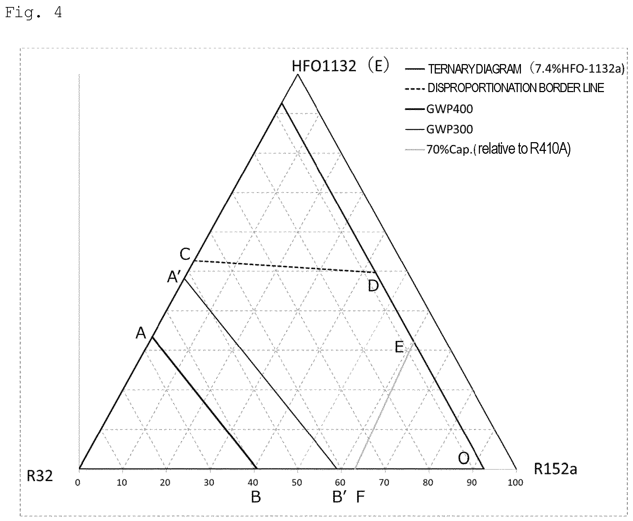

Fig. 4 is a ternary diagram showing formulations of the refrigerant of the present disclosure.

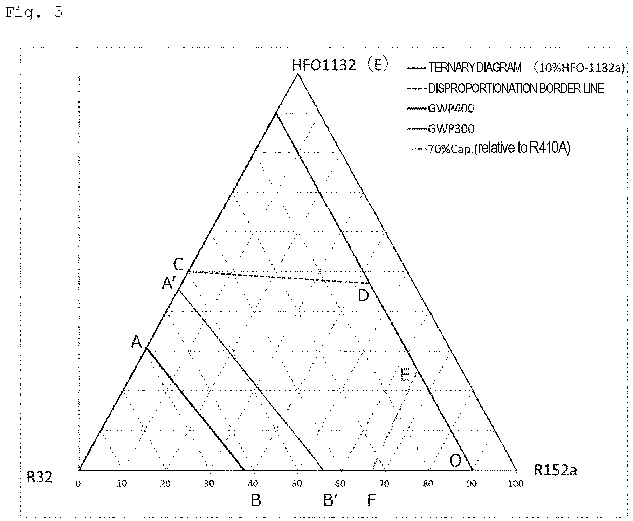

Fig. 5 is a ternary diagram showing formulations of the refrigerant of the present disclosure.

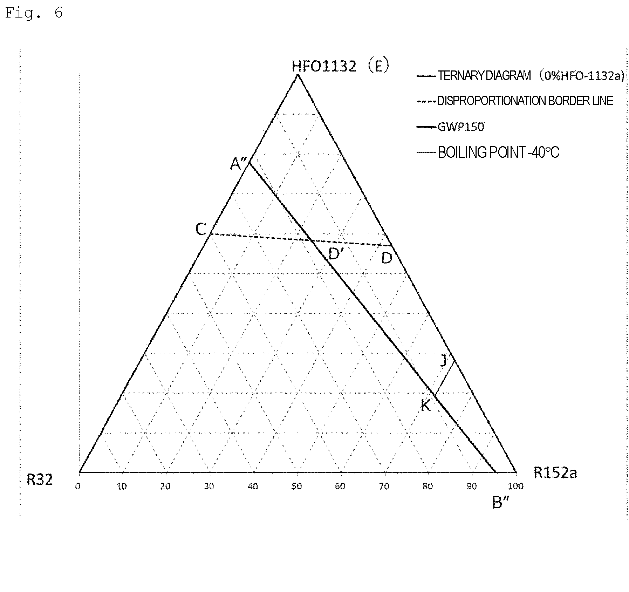

Fig. 6 is a ternary diagram showing formulations of the refrigerant of the present disclosure.

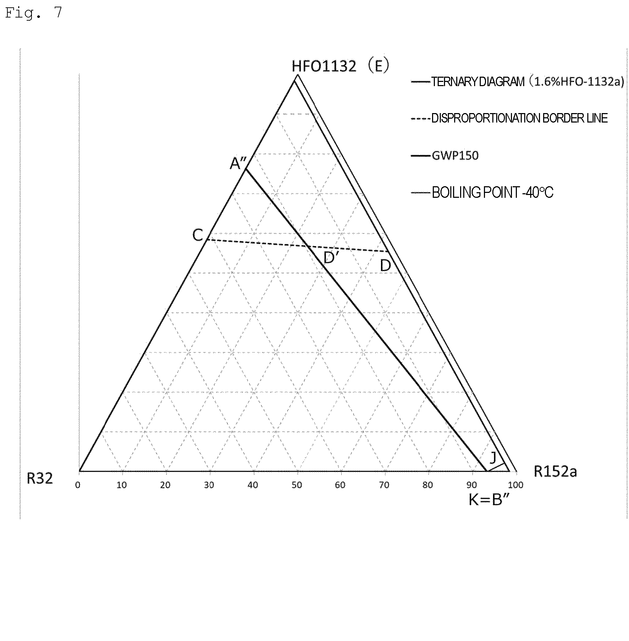

Fig. 7 is a ternary diagram showing formulations of the refrigerant of the present disclosure.

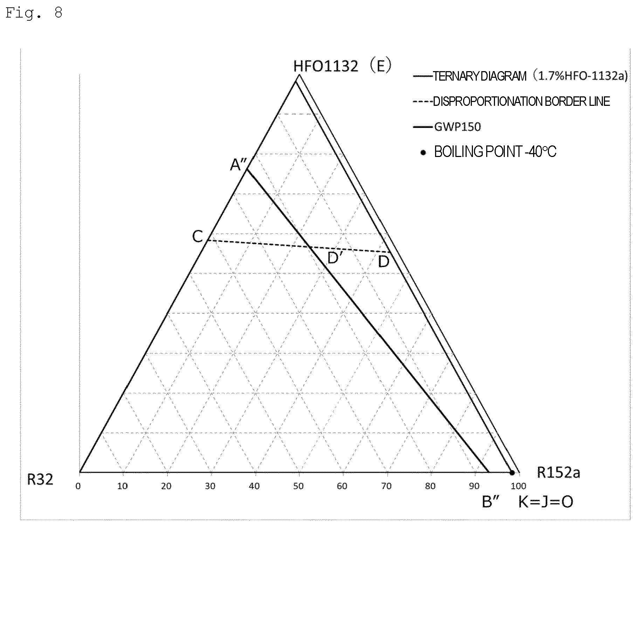

Fig. 8 is a ternary diagram showing formulations of the refrigerant of the present disclosure.

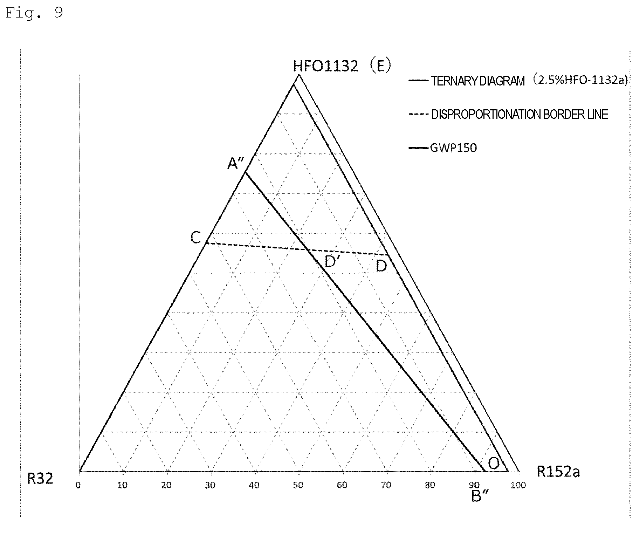

Fig. 9 is a ternary diagram showing formulations of the refrigerant of the present disclosure.

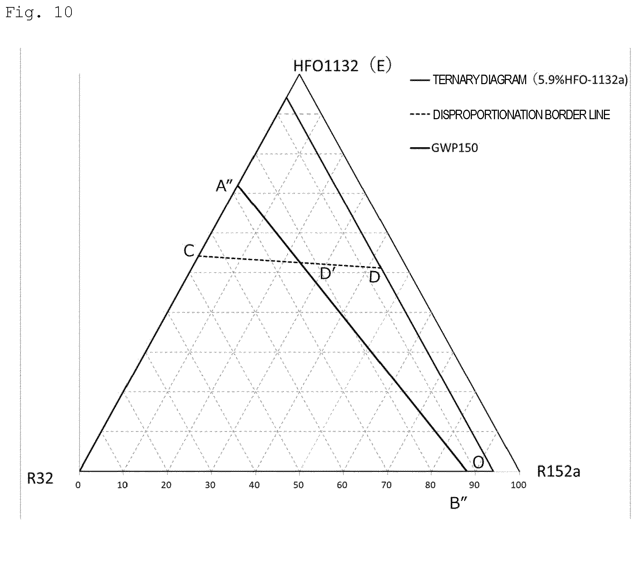

Fig. 10 is a ternary diagram showing formulations of the refrigerant of the present disclosure.

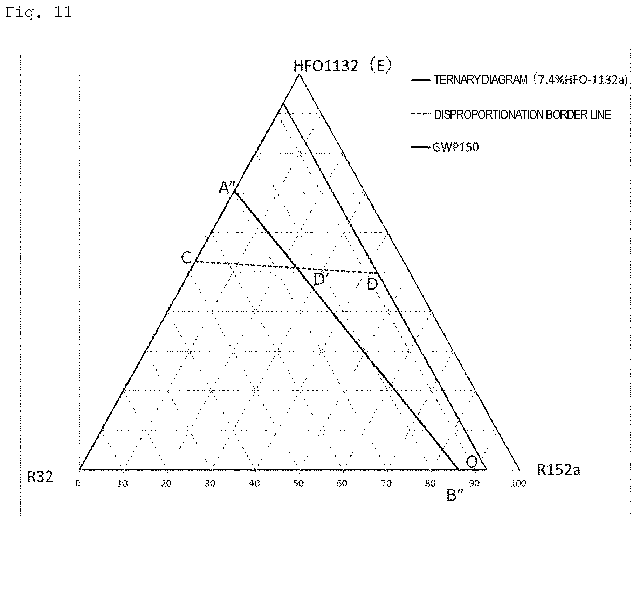

Fig. 11 is a ternary diagram showing formulations of the refrigerant of the present disclosure.

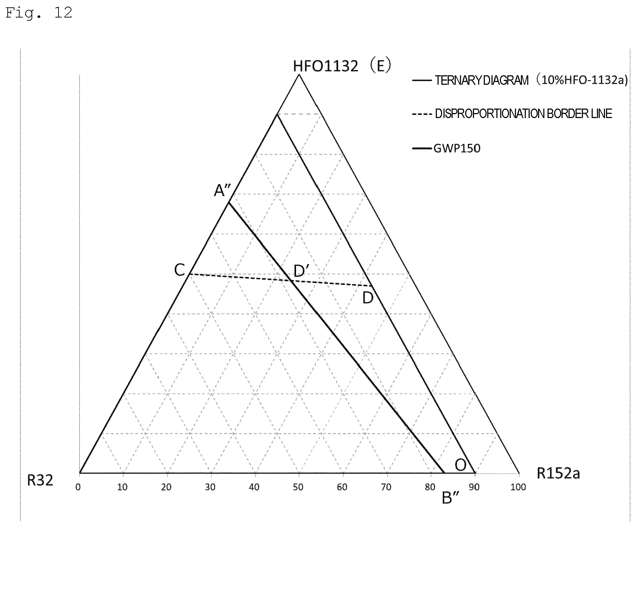

Fig. 12 is a ternary diagram showing formulations of the refrigerant of the present disclosure.

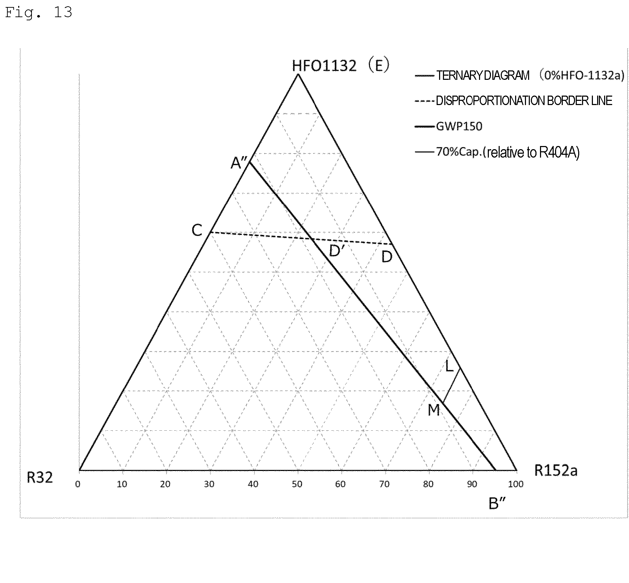

Fig. 13 is a ternary diagram showing formulations of the refrigerant of the present disclosure.

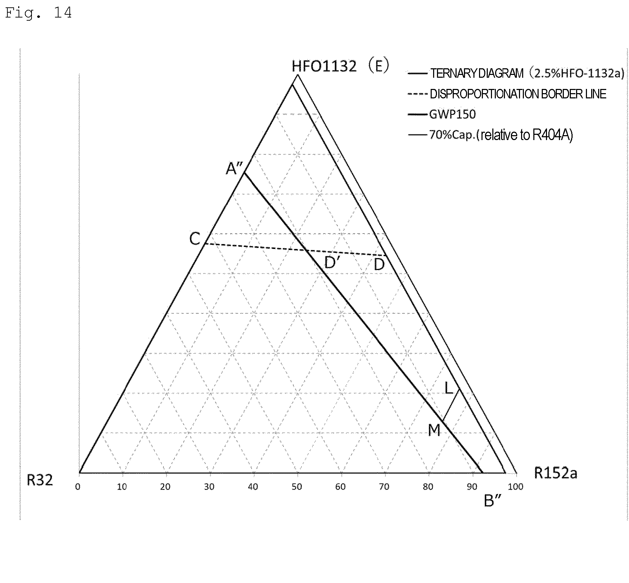

Fig. 14 is a ternary diagram showing formulations of the refrigerant of the present disclosure.

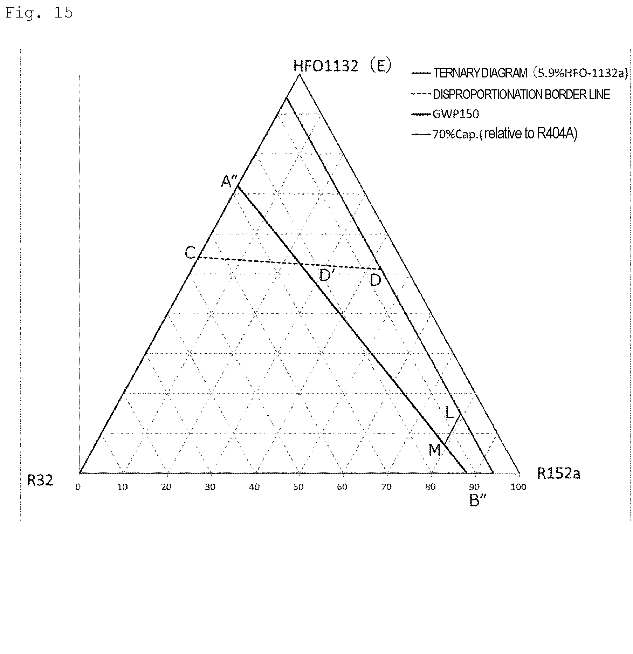

Fig. 15 is a ternary diagram showing formulations of the refrigerant of the present disclosure.

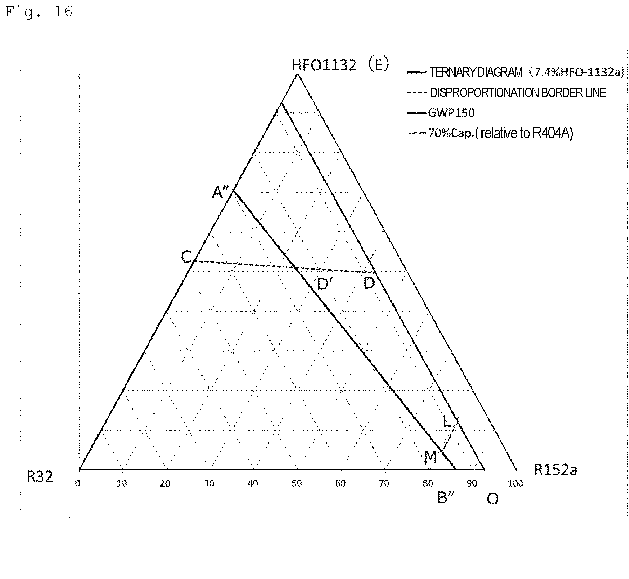

Fig. 16 is a ternary diagram showing formulations of the refrigerant of the present disclosure.

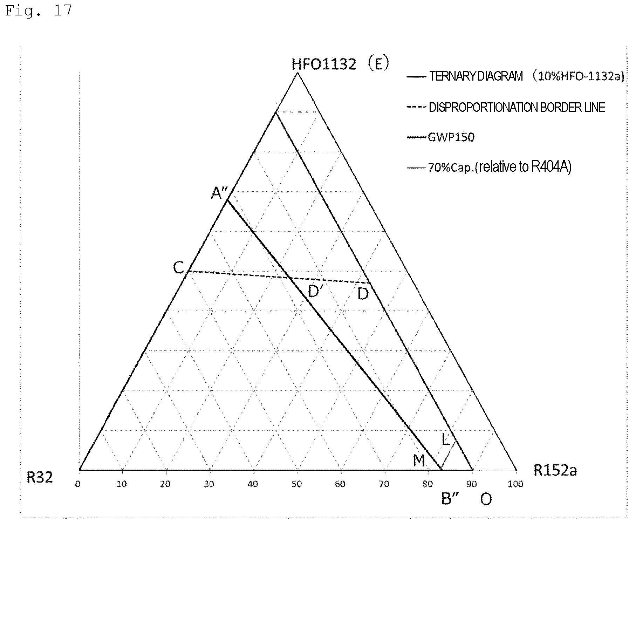

Fig. 17 is a ternary diagram showing formulations of the refrigerant of the present disclosure.

Description of Embodiments

In order to achieve the above object, the present inventors conducted extensive research and found that various mixed refrigerants described below have the characteristics described above.
The present disclosure has been completed as a result of further research based on this finding. The present disclosure includes the following embodiments.

Definition of Terms

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, "air-conditioning equipment for vehicles" is a type of refrigeration apparatus for use in vehicles, such as gasoline vehicles, hybrid vehicles, electric vehicles, and hydrogen vehicles. The air-conditioning equipment for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, the unit of pressure is an absolute pressure unless otherwise specified.

1. Refrigerant

The refrigerant of the present disclosure comprises HFO-1132(E), HFC-152a, and HFO-1132a. The refrigerant of the present disclosure may further comprise difluoromethane (R32).

The refrigerant of the present disclosure is a low-GWP mixed refrigerant.

In the refrigerant of the present disclosure, when the mass% of HFO-1132(E), R32, HFC-152a, and HFO-1132a based on their sum are respectively represented by x, y, z, and a (wherein $0 < a \leq 10.0$), if coordinates (x,y,z) satisfy the following requirements in a ternary composition diagram in which the sum of HFO-1132(E), R32, and HFC-152a is (100-a) mass%, a disproportionation reaction does not occur at 5 MPa and 150°C, and GWP is 400 or less.

<Requirements>

The coordinates (x,y,z) are, when $0 < a \leq 5.9$, within the range of a figure surrounded by straight lines CD, DO, OB, BA, and AC that connect the following 5 points:

point C (-a+60.0, 40.0, 0.0),
point D (-a+57.0, 0.0, 43.0),
point O (0.0, 0.0, -a+100),
point B (0.0, $0.006a^2$+0.185a+32.00, $-0.006a^2$-1.185a+68.00), and

point A (-a+40.8, 59.2, 0.0), or

on the straight lines CD, DO, and BA (excluding the points C, O, B, and A), and
the coordinates (x,y,z) are, when $5.9 < a \leq 10.0$, within the range of a figure surrounded by straight lines CD, DO, OB, BA, and AC that connect the following 5 points:

point C (-a+60.0, 40.0, 0.0),
point D (-a+57.0, 0.0, 43.0),
point O (0.0, 0.0, -a+100),
point B (0.0, $-0.0019a^2+0.225a+32.038$, $0.0019a^2-1.225a+67.962$), and
point A (-a+40.8, 59.2, 0.0), or

on the straight lines CD, DO, and BA (excluding the points C, O, B, and A).

In the refrigerant of the present disclosure, when the coordinates (x, y, z) satisfy the following requirements, a disproportionation reaction does not occur at 53 MPa and 150°C, GWP is 400 or less, and a refrigerating capacity (Cap) ratio relative to R410A is 70% or more.

<Requirements>

The coordinates (x,y,z) are, when $0 < a \leq 5.9$, within the range of a figure surrounded by straight lines CD, DE, EE', E'F, FB, BA and AC that connect the following 7 points:

point C (-a+60.0, 40.0, 0.0)
point D (-a+57.0, 0.0, 43.0),
point E ($-0.0152a^2-2.4021a+50.70$, 0.0, $0.00152a^2+1.4021a+49.30$),
point E' ($-0.0082a^2-2.0196a+12.2$, $0.0008a^2-0.242a+34.7$, $0.0074a^2+1.2616a+53.1$),
point F (0.0, $-0.007a^2-2.3826a+47.6$, $0.007a^2+1.3826a+52.4$),
point B (0.0, $0.006a^2+0.185a+32.00$, $-0.006a^2-1.185a+68.00$), and
point A (-a+40.8, 59.2, 0.0), or

on the straight lines CD, DE, EE', E'F, and BA (excluding the points C, F, B, and A), and
the coordinates (x,y,z) are, when $5.9 \leq a \leq 10.0$, within the range of a figure surrounded by straight lines CD, DE, EF, FB, BA and AC that connect the following 6 points:

point C (-a+60.0, 40.0, 0.0)
point D (-a+57.0, 0.0, 43.0),
point E ($-0.0131a^2-2.4253a+50.767$, 0.0, $0.0131a^2+1.4253a+49.233$),
point F (0.0, $0.0081a^2-2.6415a+48.602$, $-0.0081a^2+1.6415a+51.398$),
point B (0.0, $-0.0019a^2+0.225a+32.038$, $0.0019a^2-1.225a+67.962$), and
point A (-a+40.8, 59.2, 0.0), or

on the straight lines CD, DE, EF, and BA (excluding the points C, F, B, and A).

In the refrigerant of the present disclosure, when the coordinates (x,y,z) satisfy the following requirements, a disproportionation reaction does not occur at 53 MPa and 150°C, GWP is 300 or less, and a refrigerating capacity (Cap) ratio relative to R410A is 70% or more.

<Requirements>

The coordinates (x,y,z) are, when $0 < a \leq 5.9$, within the range of a figure surrounded by straight lines CD, DE, EE', E'A', and A'C that connect the following 5 points:

point C (-a+60.0, 40.0, 0.0)
point D (-a+57.0, 0.0, 43.0),
point E ($-0.0152a^2-2.4021a+50.70$, 0.0, $0.00152a^2+1.4021a+49.30$),
point E' ($-0.0082a^2-2.0196a+12.2$, $-0.0008a^2-0.242a+34.7$, $0.0074a^2+1.2616a+53.1$), and
point A' (-a+55.6, 44.4, 0.0), or

on the straight lines CD, DE, EE', and E'A' (excluding the points C and A'), and

the coordinates (x,y,z) are, when $5.9 < a \leq 10.0$, within the range of a figure surrounded by straight lines CD, DE, EF, FB', B'A', and A'C that connect the following 6 points:

> point C (-a+60.0, 40.0, 0.0)
> point D (-a+57.0, 0.0, 43.0),
> point E (-0.0131a$^2$-2.4253a+50.767, 0.0, 0.00131a$^2$+1.4253a+49.233),
> point F (0.0, -0.0081a$^2$-2.6415a+48.602, - 0.0081a$^2$+1.6415a+51.398),
> point B' (0.0. -0.0137a$^2$+0.4304a+31.164, 0.0137a$^2$-1.4304a+68.836), and
> point A' (-a+55.6, 44.4, 0.0), or

on the straight lines CD, DE, EF, and B'A' (excluding the points C, F, B', and A').

In the refrigerant of the present disclosure, when the coordinates (x,y,z) satisfy the following requirements, a disproportionation reaction does not occur at 53 MPa and 150°C, GWP is 150 or less, and a boiling point is -40°C or less.

<Requirements>

The coordinates (x,y,z) are, when $0 < a \leq 1.6$, within the range of a figure surrounded by straight lines D'D, DJ, JK, and KD' that connect the following 4 points:

> point D' (-a+58.3, 17.7, 24.0),
> point D (-a+57.0, 0.0, 43.0),
> point J (-17.625a+28.2, 3.1875a, 13.438a+71.8), and
> point K (-10.625a+19.2, 5.625a+9.0, 15.25a+71.8), or

on the straight lines D'D, DJ, JK, and KD', and

the coordinates (x,y,z) are, when $1.6 < a \leq 1.7$, within the range of a figure surrounded by straight lines D'D, DJ, JK, and KD' that connect the following 4 points:

> point D' (-a+58.3, 17.7, 24.0),
> point D (-a+57.0, 0.0, 43.0),
> point J (-17.625a+28.2, 3.1875a, 13.438a+71.8), and
> point K (-22.0a+37.4, 0.0, 21.0a+62.6), or

on the straight lines D'D, DJ, JK, and KD', and
the coordinates (x,y,z) are, when $1.7 < a \leq 10.0$, within the range of a figure surrounded by straight lines D'D, DO, OB'', and B''D' that connect the following 4 points:

> point D' (-a+58.3, 17.7, 24.0),
> point D (-a+57.0, 0.0, 43.0),
> point O (0.0, 0.0, -a+100.0), and
> point B'' (0.0, -0.0014a$^2$-0,2396a+4.657, 0.0014a$^2$-1.2396a+95.343), or

> on the straight lines D'D, DO, and B''D' (excluding the points O and B'').

The refrigerant of the present disclosure may comprise HFO-1132(E) and HFC-152a. The refrigerant may further comprise R32.

In the above-described embodiment, when the mass% of HFO-1132(E), R32, HFC-152a, and HFO-1132a in the refrigerant of the present disclosure based on their sum are respectively represented by x, y, z, and a (wherein $0 < a \leq 10.0$), if the coordinates (x,y,z) satisfy the following requirements in a ternary composition diagram in which the sum of HFO-1132(E), R32, and HFC-152a is (100-a) mass%, a disproportionation reaction does not occur at 5 MPa and 150°C, GWP is 150 or less, and a refrigerating capacity (Cap) ratio relative to R404A is 70% or more.

<Requirements>

The coordinates (x,y,z) are, when $0 < a \leq 5.9$, within the range of a figure surrounded by straight lines D'D, DL, LM, and MD' that connect the following 4 points:

point D' (-a+58.3, 17.7, 24.0),
point D (-a+57.0, 0.0, 43.0),
point L (-1.6619a+16.92, -0.1522a+8.4929, 0.8141a+74.587), and
point M ($0.0046a^2$-1.8915a+25.9, 0.0, - $0.0462a^2$+0.8915a+74.1), or

on the straight lines D'D, DL, LM, and MD', and

when $5.9 < a \leq 10.0$,
the coordinates (x,y,z) are within the range of a figure surrounded by straight lines D'D, DL, LM, and MD' that connect the following 4 points:

point D' (-a+58.3, 17.7, 24.0),
point D (-a+57.0, 0.0, 43.0),
point L ($0.0219a^2$-1.9578a+17.889, -$0.005a^2$-0.0668a+8.1682, -$0.0169a^2$+1.0246a+73.943), and
point M ($0.0075a^2$-1.8998a+25.848, 0.0, - $0.0075a^2$+0.8998a+74.152), or

on the straight lines D'D, DL, LM, and MD'.

The refrigerant of the present disclosure may comprise HFO-1132(E) in an amount of 10 mass% or more, 20 mass% or more, 30 mass% or more, 40 mass% or more, or 50 mass% or more based on the entire refrigerant.

The refrigerant of the present disclosure may comprise R32 in an amount of 10 mass% or more, 20 mass% or more, 30 mass% or more, 40 mass% or more, or 50 mass% or more based on the entire refrigerant.

The refrigerant of the present disclosure may comprise R152a in an amount of 10 mass% or more, 20 mass% or more, 30 mass% or more, 40 mass% or more, 50 mass% or more, 60 mass% or more, 70 mass% or more, 80 mass% or more, or 90 mass% or more based on the entire refrigerant.

The refrigerant of the present disclosure may further comprise additional refrigerants in addition to HFO-1132(E), R32, HFC-152a, and HFO-1132a as long as the above properties and effects are not impaired. In this respect, the refrigerant of the present disclosure in an embodiment preferably comprises HFO-1132(E), R32, HFC-152a, and HFO-1132a in a total amount of 99.5 mass% or more, more preferably 99.75 mass% or more, still more preferably 99.9 mass% or more, further preferably 99.999 mass%, and most preferably 99.9999 mass% or more, based on the entire refrigerant. The refrigerant of the present disclosure may substantially consist only of HFO-1132(E), R32, HFC-152a, and HFO-1132a, and in this case, the refrigerant of the present disclosure may also consist only of HFO-1132(E), R32, HFC-152a, and HFO-1132a, an unavoidable impurity. The refrigerant of the present disclosure may consist only of HFO-1132(E), R32, HFC-152a, and HFO-1132a.

Additional refrigerants are not limited and can be widely selected. The mixed refrigerant may contain one additional refrigerant, or two or more additional refrigerants.

Examples of the additional refrigerant include methylamine, acetylene, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

## 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

## 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

The composition of the present disclosure also includes a composition comprising a refrigerant, the refrigerant comprising HFO-1132(E), R32, R1234yf, and 0.1% or less of water.

2.2. Tracer

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The refrigerant composition of the present disclosure may comprise about 10 parts per million by weight (ppm) or more of tracers in total, based on the entire refrigerant composition. The refrigerant composition of the present disclosure may also comprise about 1000 ppm or less of tracers in total, based on the entire refrigerant composition. The refrigerant composition of the present disclosure may preferably comprise about 30 ppm or more and more preferably about 50 ppm or more of tracers in total, based on the entire refrigerant composition. The refrigerant composition of the present disclosure may preferably comprise about 500 ppm or less and about 300 ppm or less of tracer in total, based on the entire refrigerant composition.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

**3.** Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 mass% or more of refrigeration oil. The refrigeration-oil-containing working fluid generally comprises 50 mass% or less of refrigeration oil.

3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration-oil-containing working fluid according to the present disclosure may further optionally contain at least one additive. Examples of additives include compatibilizing agents described below.

3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

5. Method for suppressing disproportionation reaction

The method for suppressing the disproportionation reaction is a method for suppressing a disproportionation reaction of HFO-1132(E), comprising the step of operating a refrigeration cycle using the refrigerant of the present disclosure.

In the method for suppressing the disproportionation reaction of the present disclosure, particularly, it is possible to obtain an effect that the disproportionation reaction of HFO-1132 (E) does not occur even when the refrigerant pressure is 5.03.0 MPa and the refrigerant temperature is 150°C.

According to the method for suppressing a disproportionation reaction of the present disclosure, it is possible to operate a refrigeration cycle while suppressing a disproportionation reaction even in a refrigerating machine that is not specifically provided with a means for suppressing the disproportionation reaction.

6. Use for suppressing disproportionation reaction

The use of the present disclosure is the use of HFO-1123, R32, R152a, and HFO-1132a for suppressing a disproportionation reaction of HFO-1132(E), wherein the suppression of the disproportionation reaction is carried out by mixing HFO-1123, R32, R152a, HFO-1132a, and HFO-1132(E) at a mixing ratio of the refrigerant of the present disclosure.

In the use for suppressing the disproportionation reaction of the present disclosure, particularly, it is possible to obtain an effect that the disproportionation reaction of HFO-1132 (E) does not occur even when the refrigerant pressure is 5.03.0 MPa and the refrigerant temperature is 150°C.

The embodiments are described above; however, it will be understood that various changes in form and detail can be made without departing from the spirit and scope of the claims.

Examples

The present disclosure is described in more detail below with reference to Examples. However, the present disclosure is not limited to the Examples.

Mixed refrigerants were prepared by mixing HFO-1132(E), R32, R152a, and HFO-1132a at mass% based on their sum shown in Tables 1 to 3.

Each of these mixed refrigerants was examined for disproportionation reactions under the following test methods and conditions.

Test Method

A refrigerant composition to be tested was transferred into a test container and heated to 150°C, and then a voltage was applied to a Pt wire in the container to fuse the wire, thereby applying energy of 30 J to the refrigerant composition. The occurrence of the disproportionation reaction was determined by a rapid increase in pressure and temperature in the apparatus.

Test Conditions

Test container: 38 cc, made of stainless steel (SUS),
Test temperature: 150°C
Pressure: 53 MPa
Evaluation Criteria
"Non-explosion": the temperature or pressure after the fusion of the Pt wire is less than 2 times, and no rapid disproportionation reaction occurs.
"Explosion": the temperature or pressure after the fusion of the Pt wire reaches twice or more and a rapid disproportionation reaction occurs

[Table 1]

| Item | Unit | Experiment series 1-1 | | | Experiment series 1-2 | | | | | Experiment series 1-3 | | |
|---|---|---|---|---|---|---|---|---|---|---|---|---|
| | | Sam.1-1 | Sam.1-2 | Sam.1-3 | Sam.1-4 | Sam.1-5 | Sam.1-6 | Sam.1-7 | Sam.1-8 | Sam.1-9 | Sam.1-10 | Sam.1-11 |
| HFO-1132 (E) | mass% | 62.0 | 60.0 | 58.0 | 60.5 | 60.5 | 58.5 | 56.5 | 56.5 | 59.0 | 57.0 | 550 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| HFO-1132a | mass% | 0.0 | 0.0 | 0.0 | 0.0 | 0.0 | 0.0 | 0.0 | 0.0 | 0.0 | 0.0 | 0.0 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

| Item | Unit | Experiment series 2-1 | | | Experiment series 2-2 | | | | | Experiment series 2-3 | | |
|---|---|---|---|---|---|---|---|---|---|---|---|---|
| | | Sam.2-1 | Sam.2-2 | Sam.2-3 | Sam.2-4 | Sam.2-5 | Sam.2-6 | Sam.2-7 | Sam.2-8 | Sam.2-9 | Sam.2-10 | Sam.2-11 |
| HFO-1132 (E) | mass% | 60.4 | 58.4 | 56.4 | 58.9 | 58.9 | 56.9 | 54.9 | 54.9 | 57.4 | 55.4 | 53.4 |
| R32 | mass% | 38.0 | 400 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| HFO-1132a | mass% | 1.6 | 1.6 | 1.6 | 1.6 | 1.6 | 1.6 | 1.6 | 1.6 | 1.6 | 1.6 | 1.6 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

| Item | Unit | Experiment series 3-1 | | | Experiment series 3-2 | | | | | Experiment series 3-3 | | |
|---|---|---|---|---|---|---|---|---|---|---|---|---|
| | | Sam.3-1 | Sam.3-2 | Sam.3-3 | Sam.3-4 | Sam.3-5 | Sam.3-6 | Sam.3-7 | Sam.3-8 | Sam.3-9 | Sam.3-10 | Sam.3-11 |
| HFO-1132 (E) | mass% | 60.3 | 58.3 | 56.3 | 58.8 | 58.8 | 56.8 | 54.8 | 54.8 | 57.3 | 55.3 | 53.3 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| HFO-1132a | mass% | 1.7 | 1.7 | 1.7 | 1.7 | 1.7 | 1.7 | 1.7 | 1.7 | 1.7 | 1.7 | 1.7 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

EP 4 640 788 A1

[Table 2]

| Item | Unit | Experiment series 4-1 | | | Experiment series 4-2 | | | | | Experiment series 4-3 | | |
|---|---|---|---|---|---|---|---|---|---|---|---|---|
| | | Sam.4-1 | Sam. 4-2 | Sam.4-3 | Sam.4-4 | Sam.4-5 | Sam.4-6 | Sam.4-7 | Sam.4-8 | Sam.4-9 | Sam.4-10 | Sam.4-11 |
| HFO-1132 (E) | mass% | 59.5 | 57.5 | 55.5 | 58.0 | 58.0 | 56.0 | 54.0 | 54.0 | 56.5 | 54.5 | 52.5 |
| R32 | mass% | 38.0 | 40.0 | 42.00 | 20.00 | 18.00 | 20.00 | 2000 | 22.00 | 0.00 | 0.0 | 0.0 |
| R152a | mass% | 0.0 | 0.0 | 0.00 | 19.50 | 21.50 | 21.50 | 23.50 | 21.50 | 41.00 | 43.0 | 45.0 |
| HFO-1132a | mass% | 2.5 | 2.5 | 2.5 | 2.5 | 2.5 | 2.5 | 2.5 | 2.5 | 2.5 | 2.5 | 2.5 |
| Dispraportionation reaction (5Mpa) | - | Explosion | Non-explosion | Non-explosion | Explosion | Explosion | Non-explosion | Non-explosion | Non-explosion | Explosion | Non-explosion | Non-explosion |
| Item | Unit | Experiment series 5-1 | | | Experiment series 5-2 | | | | | Experiment series 5-3 | | |
| | | Sam.5-1 | Sam.5-2 | Sam.5-3 | Sam.5-4 | Sam.5-5 | Sam.5-6 | Sam.5-7 | Sam.5-8 | Sam.5-9 | Sam.5-10 | Sam.5-11 |
| HFO-1132 (E) | mass% | 56.1 | 54.1 | 52.1 | 54.6 | 54.6 | 52.6 | 50.6 | 50.6 | 53.1 | 51.1 | 49.1 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| HFO-1132a | mass% | 5.9 | 5.9 | 5.9 | 5.9 | 5.9 | 5.9 | 5.9 | 5.9 | 5.9 | 5.9 | 5.9 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

[Table 3]

| Item | Unit | Experiment series 6-1 | | | Experiment series 6-2 | | | | | Experiment series 6-3 | | |
|---|---|---|---|---|---|---|---|---|---|---|---|---|
| | | Sam.6-1 | Sam.6-2 | Sam.6-3 | Sam.6-4 | Sam.6-5 | Sam.6-6 | Sam.6-7 | Sam.6-8 | Sam.6-9 | Sam.6-10 | Sam.6-11 |
| HFO-1132 (E) | mass% | 54.6 | 52.6 | 50.6 | 53.1 | 53.1 | 51.1 | 49.1 | 49.1 | 51.6 | 49.6 | 47.6 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| HFO-1132a | mass% | 7.4 | 7.4 | 7.4 | 7.4 | 7.4 | 7.4 | 7.4 | 7.4 | 7.4 | 7.4 | 7.4 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

| Item | Unit | Experiment series 7-1 | | | Experiment series 7-2 | | | | | Experiment series 7-3 | | |
|---|---|---|---|---|---|---|---|---|---|---|---|---|
| | | Sam.7-1 | Sam.7-2 | Sam.7-3 | Sam.7-4 | Sam.7-5 | Sam.7-6 | Sam.7-7 | Sam.7-8 | Sam.7-9 | Sam.7-10 | Sam.7-11 |
| HFO-1132 (E) | mass% | 52.0 | 50.0 | 48.0 | 50.5 | 50.5 | 48.5 | 46.5 | 46.5 | 49.0 | 47.0 | 45.0 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| HFO-1132a | mass% | 10.0 | 10.0 | 10.0 | 10.0 | 10.0 | 10.0 | 10.0 | 10.0 | 10.0 | 10.0 | 10.0 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

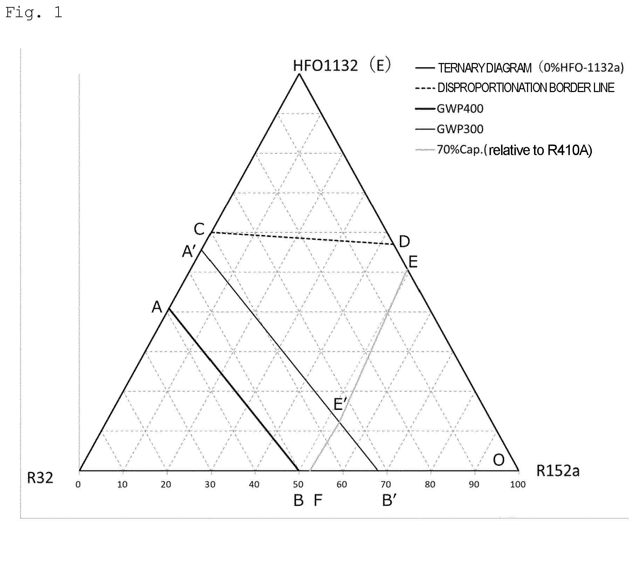

The results in Tables 1 to 3 indicate that the refrigerant of the present disclosure does not undergo disproportionation in the region shown in the ternary diagram of Figures 1 to 1716.

The GWP of HFO-1132(E) was set to 1, and the GWP of mixed refrigerants was evaluated with the GWP of R32 and HFO-1234yf based on the values stated in the Intergovernmental Panel on Climate Change (IPCC), fourth report. The COP, refrigerating capacity, discharge temperature, and boiling point of mixed refrigerants were determined by performing theoretical refrigeration cycle calculations for the mixed refrigerants using the National Institute of Science and Technology (NIST) and Reference Fluid Thermodynamic and Transport Properties Database (Refprop 10.0) under the following conditions. The physical property data of HFO-1132 (E) were determined from measured values.

<Performance Comparison with R410A>

    evaporation temperature: 5°C
    condensation temperature: 45°C
    superheating temperature: 5 K
    subcooling temperature: 5 K
    compressor efficiency: 70%

<Performance Comparison with R1234yf>

    evaporation temperature: -30°C
    condensation temperature: 30°C
    superheating temperature: 5 K
    subcooling temperature: 5 K
    compressor efficiency: 70%

<Performance Comparison with R404A>

    evaporation temperature: -40°C
    condensation temperature: 40°C
    superheating temperature: 20 K
    subcooling temperature: 0 K
    compressor efficiency: 70%

In the following tables, "COP ratio", and "Refrigerating capacity ratio" each indicate a proportion (%) relative to each specified refrigerant.

In the tables, "boiling point (°C)" indicates the temperature at which a liquid phase of the mixed refrigerant reaches atmospheric pressure (101.33 kPa). In the table, "power consumption (%) of driving force" indicate electric energy used for traveling an electric vehicle and is expressed as a ratio of power consumption when the refrigerant is R1234yf. In the tables, "power consumption (%) for heating" indicates electric energy used by an electric vehicle to operate heating and is expressed as a ratio of power consumption when the refrigerant is R1234yf.

In the following tables, "possible travel distance (with heating)" represents a relative proportion (%) of the distance that can be traveled by an electric vehicle equipped with a secondary battery with a certain electric capacity while having a heater turned on if possible travel distance (without heating) is set to 100% when the vehicle is driven without heating (power consumption for heating is 0).

For the heating method, an electric heater system was used for heating for the refrigerant having a boiling point of higher than -40°C, and a heat pump system was used for heating for the refrigerant having a boiling point of -40°C or lower.

The power consumption during heating was determined based on the following equation. The heating COP means "heating efficiency".

```
Power consumption during heating = heating capacity/heating COP
```

Regarding heating efficiency, in the case of an electric heater, the heating COP = 1, and electrodes equivalent to driving force are consumed for heating. In other words, the power consumption for heating is E = E/(1+COP).

On the other hand, in the case of a heat pump, the heating COP was also determined by theoretical refrigeration cycle calculations for the mixed refrigerants using Refprop 10.0 (manufactured by NIST) under the following conditions.

    Evaporation temperature: -30°C
    Condensation temperature: 30°C

Superheating temperature: 5K
Subcooling temperature: 5K
Compressor efficiency: 70%

The possible travel distance was determined according to the following equation.

possible travel distance= (battery capacity)/(power consumption of driving force + power consumption for heating)

These values, together with the GWP for each mixed refrigerant, are shown in the following tables. The COP ratio and refrigerating capacity ratio are shown as a proportion relative to R410A, R1234yf, or R404A.
The coefficient of performance (COP)was determined according to the following equation.

COP = (refrigerating capacity or heating capacity)/power consumption

[Table 4]

| Item | Unit | Ref.Ex. 1 | Com.Ex 1-1 | Com.Ex. 1-2 | Com.Ex. 1-3 | Com.Ex. 1-4 | Com.Ex. 1-5 | Com.Ex 1-6 | Com.Ex 1-7 | Com.Ex. 1-8 | Com.Ex 1-9 | Com.Ex. 1-10 |
|---|---|---|---|---|---|---|---|---|---|---|---|---|
| | | | A | B | A | B' | C | D | O | E | E' | F |
| E-HFO-1132 | mass% | R410A | 40.8 | 0.0 | 55.6 | 0.0 | 60.0 | 57.0 | 0.0 | 50.7 | 12.2 | 0.0 |
| R32 | mass% | | 59.2 | 50.0 | 44.4 | 32.0 | 40.0 | 0.0 | 0.0 | 0.0 | 34.7 | 47.6 |
| R152a | mass% | | 0.0 | 50.0 | 0.0 | 68.0 | 0.0 | 43.0 | 100.0 | 49.3 | 53.1 | 52.4 |
| HFO-1132a | mass% | | 0.0 | 0.0 | 0.0 | 0.0 | 0.0 | 0.0 | 0.0 | 0.0 | 0.0 | 0.0 |
| GWP | - | 2088 | 400 | 400 | 300 | 300 | 271 | 54 | 124 | 62 | 300 | 386 |
| COP ratio | % (relative to R410A) | 100 | 101 | 107 | 101 | 109 | 101 | 105 | 111 | 106 | 107 | 107 |
| Refrigerating capacity ratio | % (relative to R410A) | 100 | 111 | 72 | 110 | 60 | 109 | 74 | 42 | 70 | 70 | 70 |

| Item | Unit | Ref. Ex. 1 | Com.Ex 4-1 | Com.Ex. 4-2 | Com.Ex. 4-3 | Com.Ex. 4-4 | Com.Ex. 4-5 | Ex 4-1 | Com.Ex. 4-6 | Ex. 4-2 | Ex 4-3 | Com.Ex. 4-7 |
|---|---|---|---|---|---|---|---|---|---|---|---|---|
| | | | A | B | A | B' | C | D | O | E | E' | F |
| E-HFO-1132 | mass% | R410A | 38.3 | 0.0 | 53.1 | 0.0 | 57.5 | 54.5 | 0.0 | 44.6 | 7.1 | 0.0 |
| R32 | mass% | | 59.2 | 50.6 | 44.4 | 32.5 | 40.0 | 0.0 | 0.0 | 0.0 | 34.1 | 41.6 |
| R152a | mass% | | 0.0 | 46.9 | 0.0 | 65.0 | 0.0 | 43.0 | 97.5 | 52.9 | 56.3 | 55.9 |
| HFO-1132a | mass% | | 2.5 | 2.5 | 2.5 | 2.5 | 2.5 | 2.5 | 2.5 | 2.5 | 2.5 | 2.5 |
| GWP | - | 2088 | 400 | 400 | 300 | 300 | 271 | 54 | 121 | 66 | 300 | 350 |
| COP ratio | % (relative to R410A) | 100 | 101 | 106 | 100 | 107 | 100 | 104 | 107 | 106 | 106 | 106 |
| Refrigerating capacity ratio | % (relative to R410A) | 100 | 113 | 76 | 112 | 64 | 111 | 75 | 45 | 70 | 70 | 70 |

| Item | Unit | Ref. Ex. 1 | Com Ex. 5-1 | Com Ex. 5-2 | Com.Ex 5-3 | Com Ex. 5-4 | Com Ex. 5-5 | Ex. 5-1 | Com.Ex 5-6 | Ex. 5-2 |
|---|---|---|---|---|---|---|---|---|---|---|
| | | | A | B | A' | B'=E'=F | C | D | O | E |
| E-HFO-1132 | mass% | R410A | 34.90 | 0.0 | 49.7 | 0.0 | 54.1 | 51.1 | 0.0 | 36.0 |
| R32 | mass% | | 59.20 | 51.4 | 44.4 | 33.3 | 40.0 | 0.0 | 0.0 | 0.0 |
| R152a | mass% | | 0.00 | 42.7 | 0.0 | 60.8 | 0.0 | 43.0 | 94.1 | 58.1 |
| HFO-1132a | mass% | | 5.90 | 5.9 | 5.9 | 5.9 | 5.9 | 5.9 | 5.9 | 5.9 |
| GWP | - | 2088 | 400 | 400 | 300 | 300 | 271 | 54 | 117 | 72 |
| COP ratio | % (relative to R410A) | 100 | 100 | 104 | 100 | 105 | 99 | 104 | 104 | 105 |
| Refrigerating capacity ratio | % (relative to R410A) | 100 | 116 | 82 | 115 | 70 | 114 | 78 | 50 | 70 |

[Table 5]

| Item | Unit | Ref. Ex. 1 | Com.Ex 6-1 | Com Ex. 6-2 | Com Ex. 6-3 | Com.Ex 6-4 | Com Ex. 6-5 | Ex. 6-1 | Com.Ex 6-6 | Ex. 6-2 | Com.Ex 6-7 |
|---|---|---|---|---|---|---|---|---|---|---|---|
| | | | A | B | A' | B' | C | D | O | E | F |
| E-HFO-1132 | mass% | R410A | 33.4 | 0.0 | 48.2 | 0.0 | 52.6 | 49.6 | 0.0 | 32.1 | 0.0 |
| R32 | mass% | | 59.2 | 51.8 | 44.4 | 33.6 | 40.0 | 0.0 | 0.0 | 0.0 | 29.5 |
| R152a | mass% | | 0.0 | 40.8 | 0.0 | 59.0 | 0.0 | 43.0 | 92.6 | 60.5 | 63.1 |
| HFO-1132a | mass% | | 7.4 | 7.4 | 7.4 | 7.4 | 7.4 | 7.4 | 7.4 | 7.4 | 7.4 |
| GWP | - | 2088 | 400 | 400 | 300 | 300 | 271 | 54 | 115 | 75 | 277 |
| COP ratio | % (relative to R410A) | 100 | 100 | 104 | 99 | 105 | 99 | 103 | 104 | 105 | 105 |
| Refrigerating capacity ratio | % (relative to R410A) | 100 | 117 | 84 | 116 | 73 | 115 | 79 | 53 | 70 | 70 |
| Item | Unit | Ref. Ex. 1 | Com.Ex 7-1 | Com Ex. 7-2 | Com Ex. 7-3 | Com.Ex 7-4 | Com Ex. 7-5 | Ex. 7-1 | Com.Ex 7-6 | Ex. 7-2 | Com.Ex 7-7 |
| | | | A | B | A' | B' | C | D | O | E | F |
| E-HFO-1132 | mass% | R410A | 30.8 | 0.0 | 45.6 | 0.0 | 50.0 | 47.0 | 0.0 | 25.2 | 0.0 |
| R32 | mass% | | 59.2 | 52.3 | 44.4 | 34.1 | 40.0 | 0.0 | 0.0 | 0.0 | 23.0 |
| R152a | mass% | | 0.0 | 37.7 | 0.0 | 55.9 | 0.0 | 43.0 | 90.0 | 64.8 | 67.0 |
| HFO-1132a | mass% | | 10.0 | 100 | 10.0 | 10.0 | 100 | 10.0 | 100 | 10.0 | 100 |
| GWP | - | 2088 | 400 | 400 | 300 | 300 | 271 | 54 | 112 | 81 | 238 |
| COP ratio | % (relative to R410A) | 100 | 99 | 103 | 99 | 104 | 99 | 103 | 103 | 105 | 104 |
| Refrigerating capacity ratio | % (relative to R410A) | 100 | 119 | 89 | 118 | 77 | 117 | 81 | 57 | 70 | 70 |

[Table 6]

| Item | Unit | Ref. Ex. 1 | Sam.4-12 | Sam.4-13 | Sam.4-14 | Sam.4-15 | Sam.4-16 | Sam.4-17 | Sam.4-18 | Sam.4-19 |
|---|---|---|---|---|---|---|---|---|---|---|
| E-HFO-1132 | mass% | R410A | 100 | 10.0 | 10.0 | 10.0 | 10.0 | 30.0 | 30.0 | 30.0 |
| R32 | mass% | | 0.0 | 100 | 30.0 | 50.0 | 60.0 | 0.0 | 100 | 300 |
| R152a | mass% | | 87.5 | 77.5 | 57.5 | 37.5 | 27.5 | 67.5 | 57.5 | 37.5 |
| HFO-1132a | mass% | | 2.5 | 2.5 | 2.5 | 2.5 | 2.5 | 2.5 | 2.5 | 2.5 |
| GWP | - | 2088 | 109 | 164 | 274 | 384 | 439 | 84 | 139 | 249 |
| COP ratio | % (relative to R410A) | 100 | 108 | 107 | 106 | 105 | 104 | 107 | 106 | 104 |
| Refrigerating capacity ratio | % (relative to R410A) | 100 | 51 | 57 | 69 | 82 | 90 | 62 | 69 | 82 |

| Item | Unit | Sam.4-20 | Sam.4-21 | Sam.4-22 | Sam.4-23 | Sam.4-24 | Sam.4-25 | Sam.4-26 | Sam.4-27 |
|---|---|---|---|---|---|---|---|---|---|
| E-HFO-1132 | mass% | 300 | 30.0 | 50.0 | 50.0 | 50.0 | 65.0 | 65.0 | 65.0 |
| R32 | mass% | 500 | 60.0 | 0.0 | 10.0 | 30.0 | 0.0 | 10.0 | 30.0 |
| R152a | mass% | 17.5 | 7.5 | 47.5 | 37.5 | 17.5 | 32.5 | 22.5 | 2.5 |
| $CO_2$ | mass% | 2.5 | 2.5 | 2.5 | 2.5 | 2.5 | 2.5 | 2.5 | 2.5 |
| GWP | - | 360 | 415 | 59 | 115 | 225 | 41 | 96 | 206 |
| COP ratio | % (relative to R410A) | 102 | 101 | 105 | 104 | 102 | 103 | 102 | 100 |
| Refrigerating capacity ratio | % (relative to R410A) | 98 | 106 | 73 | 80 | 96 | 81 | 89 | 108 |
| Disproportionation reaction (5Mpa) | - | - | - | - | - | Non-explosion | Explosion | Explosion | Explosion |

[Table 7]

| Item | Unit | Ref.Ex. 1 | Sam.5-12 | Sam.5-13 | Sam.5-14 | Sam.5-15 | Sam.5-16 | Sam.5-17 | Sam.5-18 | Sam.5-19 |
|---|---|---|---|---|---|---|---|---|---|---|
| E-HFO-1132 | mass% | R410A | 100 | 10.0 | 10.0 | 100 | 10.0 | 300 | 30.0 | 30.0 |
| R32 | mass% | | 0.0 | 10.0 | 30.0 | 50.0 | 60.0 | 0.0 | 10.0 | 30.0 |
| R152a | mass% | | 84.1 | 74.1 | 54.1 | 34.1 | 24.1 | 64.1 | 54.1 | 34.1 |
| HFO-1132a | mass% | | 5.9 | 5.9 | 5.9 | 5.9 | 5.9 | 5.9 | 5.9 | 5.9 |
| GWP | - | 2088 | 104 | 160 | 270 | 380 | 435 | 80 | 135 | 245 |
| COP ratio | % (relative to R410A) | 100 | 106 | 106 | 105 | 103 | 102 | 106 | 105 | 103 |
| Refrigerating capacity ratio | % (relative to R410A) | 100 | 56 | 62 | 74 | 88 | 95 | 67 | 73 | 87 |

| Item | Unit | Sam.5-20 | Sam.5-21 | Sam.5-22 | Sam.5-23 | Sam.5-24 | Sam.5-25 | Sam.5-26 | Sam.5-27 |
|---|---|---|---|---|---|---|---|---|---|
| E-HFO-1132 | mass% | 30.0 | 30.0 | 50.0 | 50.0 | 50.0 | 60.0 | 60.0 | 60.0 |
| R32 | mass% | 50.0 | 60.0 | 0.0 | 10.0 | 30.0 | 0.0 | 10.0 | 30.0 |
| R152a | mass% | 14.1 | 4.1 | 44.1 | 34.1 | 14.1 | 34.1 | 24.1 | 4.1 |
| $CO_2$ | mass% | 5.9 | 5.9 | 5.9 | 5.9 | 5.9 | 5.9 | 5.9 | 5.9 |
| GWP | - | 355 | 410 | 55 | 110 | 221 | 43 | 98 | 208 |
| COP ratio | % (relative to R410A) | 101 | 100 | 104 | 103 | 101 | 103 | 102 | 100 |
| Refrigerating capacity ratio | % (relative to R410A) | 103 | 112 | 77 | 85 | 101 | 83 | 91 | 109 |
| Disproportionation reaction (5Mpa) | | - | - | - | - | Non-explosion | Explosion | Explosion | Explosion |

[Table 8]

| Item | Unit | Ref.Ex. 1 | Sam.6-12 | Sam.6-13 | Sam.6-14 | Sam.6-15 | Sam.6-16 | Sam.6-17 | Sam.6-18 | Sam.6-19 |
|---|---|---|---|---|---|---|---|---|---|---|
| E-HFO-1132 | mass% | R410A | 10.0 | 10.0 | 10.0 | 10.0 | 100 | 30.0 | 30.0 | 30.0 |
| R32 | mass% | | 0.0 | 100 | 30.0 | 50.0 | 60.0 | 0.0 | 10.0 | 30.0 |
| R152a | mass% | | 82.6 | 72.6 | 52.6 | 32.6 | 22.6 | 62.6 | 52.6 | 32.6 |
| HFO-1132a | mass% | | 7.4 | 7.4 | 7.4 | 7.4 | 7.4 | 7.4 | 7.4 | 7.4 |
| GWP | - | 2088 | 103 | 158 | 268 | 378 | 433 | 78 | 133 | 243 |
| COP ratio | % (relative to R410A) | 100 | 105 | 105 | 105 | 103 | 102 | 105 | 104 | 102 |
| Refrigerating capacity ratio | % (relative to R410A) | 100 | 58 | 64 | 77 | 90 | 98 | 69 | 75 | 89 |

| Item | Unit | Sam.6-20 | Sam.6-21 | Sam.6-22 | Sam.6-23 | Sam.6-24 | Sam.6-25 | Sam.6-26 | Sam.6-27 |
|---|---|---|---|---|---|---|---|---|---|
| E-HFO-1132 | mass% | 30.0 | 30.0 | 45.0 | 45.0 | 45.0 | 55.0 | 55.0 | 55.0 |
| R32 | mass% | 50.0 | 60.0 | 0.0 | 10.0 | 30.0 | 0.0 | 100 | 30.0 |
| R152a | mass% | 12.6 | 2.6 | 47.6 | 37.6 | 17.6 | 37.6 | 27.6 | 7.6 |
| $CO_2$ | mass% | 7.4 | 7.4 | 7.4 | 7.4 | 7.4 | 7.4 | 7.4 | 7.4 |
| GWP | - | 353 | 409 | 60 | 115 | 225 | 47 | 102 | 213 |
| COP ratio | % (relative to R410A) | 101 | 100 | 104 | 103 | 101 | 103 | 102 | 100 |
| Refrigerating capacity ratio | % (relative to R410A) | 105 | 115 | 77 | 84 | 100 | 82 | 90 | 107 |
| Disproportionation reaction (5Mpa) | | - | - | - | - | Non-explosion | Explosion | Explosion | Explosion |

[Table 9]

| Item | Unit | Ref.Ex. 1 | Sam.7-12 | Sam.7-13 | Sam.7-14 | Sam.7-15 | Sam.7-16 | Sam.7-17 | Sam.7-18 | Sam.7-19 |
|---|---|---|---|---|---|---|---|---|---|---|
| E-HFO-1132 | mass% | R410A | 100 | 10.0 | 10.0 | 100 | 10.0 | 25.0 | 25.0 | 250 |
| R32 | mass% | | 0.0 | 10.0 | 30.0 | 50.0 | 60.0 | 0.0 | 10.0 | 30.0 |
| R152a | mass% | | 80.0 | 70.0 | 50.0 | 30.0 | 20.0 | 65.0 | 55.0 | 35.0 |
| HFO-1132a | mass% | | 100 | 10.0 | 10.0 | 100 | 10.0 | 10.0 | 10.0 | 100 |
| GWP | - | 2088 | 99 | 155 | 265 | 375 | 430 | 81 | 136 | 246 |
| COP ratio | % (relative to R410A) | 100 | 105Z | 105 | 104 | 102 | 101 | 105 | 104 | 102 |
| Refrigerating capacity ratio | % (relative to R410A) | 100 | 62 | 68 | 80 | 94 | 102 | 70 | 76 | 90 |

| Item | Unit | Sam.7-20 | Sam.7-21 | Sam.7-22 | Sam.7-23 | Sam.7-24 | Sam.7-25 | Sam.7-26 | Sam.7-27 |
|---|---|---|---|---|---|---|---|---|---|
| E-HFO-1132 | mass% | 25.0 | 250 | 40.0 | 40.0 | 40.0 | 55.0 | 55.0 | 55.0 |
| R32 | mass% | 50.0 | 60.0 | 0.0 | 10.0 | 30.0 | 0.0 | 10.0 | 30.0 |
| R152a | mass% | 15.0 | 5.0 | 50.0 | 40.0 | 20.0 | 35.0 | 25.0 | 5.0 |
| CO2 | mass% | 10.0 | 100 | 10.0 | 10.0 | 100 | 10.0 | 10.0 | 10.0 |
| GWP | - | 356 | 412 | 63 | 118 | 228 | 44 | 99 | 209 |
| COP ratio | % (relative to R410A) | 100 | 100 | 104 | 102 | 100 | 102 | 101 | 99 |
| Refrigerating capacity ratio | % (relative to R410A) | 105 | 115 | 77 | 84 | 100 | 86 | 93 | 111 |
| Disproportionation reaction (5Mpa) | | - | - | - | - | Non-explosion | Explosion | Explosion | Explosion |

The coordinates of each point were obtained by the least squares method as follows.

[Table 10]

| Point A | | | | | | |
|---|---|---|---|---|---|---|
| a=CO2 | mass% | 0.0 | 2.5 | 5.9 | 7.4 | 10.0 |
| E-HFO-1132 | mass% | 40.8 | 38.3 | 34.9 | 33.4 | 30.8 |
| R32 | mass% | 59.2 | 59.2 | 59.2 | 59.2 | 59.2 |
| R152a | mass% | 0.0 | 0.0 | 0.0 | 0.0 | 0.0 |
| E-HFO-1132 Approximation formula | | $-a+40.8$ | | | | |
| R32 Approximation formula | | 59.2 | | | | |
| R152a Approximation formula | | 0.0 | | | | |

| Point B | | | | | | |
|---|---|---|---|---|---|---|
| a=CO2 | mass% | 0.0 | 2.5 | 5.9 | 5.9 | 7.4 | 10.0 |
| E-HFO-1132 | mass% | 0.0 | 0.0 | 0.0 | 0.0 | 0.0 | 0.0 |
| R32 | mass% | 32.0 | 32.5 | 33.3 | 33.3 | 33.6 | 34.1 |
| R152a | mass% | 68.0 | 65.0 | 60.8 | 60.8 | 59.0 | 55.9 |
| E-HFO-1132 Approximation formula | 0.0 | | | 0.0 | | |
| R32 Approximation formula | $0.006a^2+0.185a+32.00$ | | | $-0.0019a^2+0.225a+32.038$ | | |
| R152a Approximation formula | $-0.006a^2-1.185a+68.00$ | | | $0.0019a^2-1.225a+67.962$ | | |

[Table 11]

| Point A' | | | | | | |
|---|---|---|---|---|---|---|
| a=CO2 | mass% | 0.0 | 2.5 | 5.9 | 7.4 | 10.0 |
| E-HFO-1132 | mass% | 55.6 | 53.1 | 49.7 | 48.2 | 45.6 |
| R32 | mass% | 44.4 | 44.4 | 44.4 | 44.4 | 44.4 |
| R152a | mass% | 0.0 | 0.0 | 0.0 | 0.0 | 0.0 |
| E-HFO-1132 Approximation formula | | $-a+55.6$ | | | | |
| R32 Approximation formula | | 44.4 | | | | |
| R152a Approximation formula | | 0.0 | | | | |

| Point B' | | | | | | |
|---|---|---|---|---|---|---|
| a=CO2 | mass% | 0.00 | 1.60 | 4.75 | 4.75 | 7.40 | 10.00 |
| E-HFO-1132 | mass% | 0.00 | 0.00 | 0.00 | 0.00 | 0.00 | 0.00 |
| R32 | mass% | 32.00 | 32.30 | 32.90 | 32.90 | 33.60 | 34.10 |
| R152a | mass% | 68.00 | 66.10 | 62.35 | 62.35 | 59.00 | 55.90 |
| E-HFO-1132 Approximation formula | 0.0 | | | 0.0 | | |
| R32 Approximation formula | $0.0006a^2+0.1865a+32.00$ | | | $-0.0137a^2+0.4304a+31.164$ | | |
| R152a Approximation formula | $-0.0006a^2-1.1865a+68.00$ | | | $0.0137a^2-1.4304a+68.836$ | | |

[Table 12]

| Point C | | | | | | |
|---|---|---|---|---|---|---|
| a=CO2 | mass% | 0.0 | 2.5 | 5.9 | 7.4 | 10.0 |
| E-HFO-1132 | mass% | 60.0 | 57.5 | 54.1 | 52.6 | 50.0 |
| R32 | mass% | 40.0 | 40.0 | 40.0 | 40.0 | 40.0 |
| R152a | mass% | 0.0 | 0.0 | 0.0 | 0.0 | 0.0 |
| E-HFO-1132 Approximation formula | | $-a+60.0$ | | | | |
| R32 Approximation formula | | 40.0 | | | | |
| R152a Approximation formula | | 0.0 | | | | |
| Point D | | | | | | |
| a=CO2 | mass% | 0.0 | 2.5 | 5.9 | 7.4 | 10.0 |
| E-HFO-1132 | mass% | 57.0 | 54.5 | 51.1 | 49.6 | 47.0 |
| R32 | mass% | 0.0 | 0.0 | 0.0 | 0.0 | 0.0 |
| R152a | mass% | 43.0 | 43.0 | 43.0 | 43.0 | 43.0 |
| E-HFO-1132 Approximation formula | | $-a+57.0$ | | | | |
| R32 Approximation formula | | 0.0 | | | | |
| R152a Approximation formula | | 43.0 | | | | |
| Point O | | | | | | |
| a=CO2 | mass% | 0.0 | 2.5 | 5.9 | 7.4 | 10.0 |
| E-HFO-1132 | mass% | 0.0 | 0.0 | 0.0 | 0.0 | 0.0 |
| R32 | mass% | 0.0 | 0.0 | 0.0 | 0.0 | 0.0 |
| R152a | mass% | 100.0 | 97.5 | 94.1 | 92.6 | 90.0 |
| E-HFO-1132 Approximation formula | | 0.00 | | | | |
| R32 Approximation formula | | 0.00 | | | | |
| R152a Approximation formula | | $-a+100.00$ | | | | |

[Table 13]

| Point E | | | | | | | |
|---|---|---|---|---|---|---|---|
| a=CO2 | mass% | 0.0 | 2.5 | 5.9 | 5.9 | 7.4 | 10.0 |
| E-HFO-1132 | mass% | 50.7 | 44.6 | 36.0 | 36.0 | 32.1 | 25.2 |
| R32 | mass% | 0.0 | 0.0 | 0.0 | 0.0 | 0.0 | 0.0 |
| R152a | mass% | 49.3 | 52.9 | 58.1 | 58.1 | 60.5 | 64.8 |
| E-HFO-1132 Approximation formula | | $-0.0152a^2-2.4021a+50.70$ | | | $-0.0131a^2-2.4253a+50.767$ | | |
| R32 Approximation formula | | 0.0 | | | 0.0 | | |
| R152a Approximation formula | | $0.00152a^2+1.4021a+49.30$ | | | $0.0131a^2+1.4253a+49.233$ | | |

| Point E' | | | | |
|---|---|---|---|---|
| a=CO2 | mass% | 0.0 | 2.5 | 5.9 |
| E-HFO-1132 | mass% | 12.2 | 7.1 | 0.0 |
| R32 | mass% | 34.7 | 34.1 | 33.3 |
| R152a | mass% | 53.1 | 56.3 | 60.8 |

(continued)

| Point E' | |
|---|---|
| E-HFO-1132 Approximation formula | $-0.0082a^2-2.0196a+12.2$ |
| R32 Approximation formula | $0.0008a^2-0.242a+34.7$ |
| R152a Approximation formula | $0.0074a^2+1.2616a+53.1$ |

| Point F | | | | | | | |
|---|---|---|---|---|---|---|---|
| a=CO2 | mass% | 0.0 | 2.5 | 5.9 | 5.9 | 7.4 | 10.0 |
| E-HFO-1132 | mass% | 0.0 | 0.0 | 0.0 | 0.0 | 0.0 | 0.0 |
| R32 | mass% | 47.6 | 41.6 | 33.3 | 33.3 | 29.5 | 23.0 |
| R152a | mass% | 52.4 | 55.9 | 60.8 | 60.8 | 63.1 | 67.0 |
| E-HFO-1132 Approximation formula | | 0.0 | | | 0.0 | | |
| R32 Approximation formula | | $-0.007a^2-2.3826a+47.6$ | | | $0.0081a^2-2.6415a+48.602$ | | |
| R152a Approximation formula | | $0.007a^2+1.3826a+52.4$ | | | $-0.0081a^2+1.6415a+51.398$ | | |

It is understood, based on these results, that when the mass% of HFO-1132(E), R32, HFC-152a, and HFO-1132a in the refrigerant of the present disclosure based on their sum are respectively represented by x, y, z, and a (wherein $0 < a \leq 10.0$), in a ternary composition diagram in which the sum of HFO-1132(E), R32, and HFC-152a is (100-a) mass%, if coordinates (x,y,z) satisfy the following requirements, a disproportionation reaction does not occur at 53 MPa and 150°C, and GWP is 400 or less.

<Requirements>

The coordinates (x,y,z) are, when $0 < a \leq 5.9$, within the range of a figure surrounded by straight lines CD, DO, OB, BA, and AC that connect the following 5 points:

point C (-a+60.0, 40.0, 0.0),
point D (-a+57.0, 0.0, 43.0),
point O (0.0, 0.0, -a+100),
point B (0.0, $0.006a^2+0.185a+32.00$, $-0.006a^2-1.185a+68.00$), and
point A (-a+40.8, 59.2, 0.0), or

on the straight lines CD, DO, and BA (excluding the points C, O, B, and A), and
the coordinates (x,y,z) are, when $5.9 < a \leq 10.0$, within the range of a figure surrounded by straight lines CD, DO, OB, BA, and AC that connect the following 5 points:

point C (-a+60.0, 40.0, 0.0),
point D (-a+57.0, 0.0, 43.0),
point O (0.0, 0.0, -a+100),
point B (0.0, $-0.0019a^2+0.225a+32.038$, $0.0019a^2-1.225a+67.962$), and
point A (-a+40.8, 59.2, 0.0), or

on the straight lines CD, DO, and BA (excluding the points C, O, B, and A).
It is understood that in the refrigerant of the present disclosure, when the coordinates (x,y,z) satisfy the following requirements, a disproportionation reaction does not occur at 5 MPa and 150°C, GWP is 400 or less, and a refrigerating capacity (Cap) ratio relative to R410A is 70% or more.

<Requirements>

The coordinates (x,y,z) are, when $0 < a \leq 5.9$, within the range of a figure surrounded by straight lines CD, DE, EE', E'F, FB, BA and AC that connect the following 7 points:

point C (-a+60.0, 40.0, 0.0)
point D (-a+57.0, 0.0, 43.0),
point E ($-0.0152a^2-2.4021a+50.70$, 0.0, $0.00152a^2+1.4021a+49.30$),
point E' ($-0.0082a^2-2.0196a+12.2$, $-0.0008a^2-0.242a+34.7$, $0.0074a^2+1.2616a+53.1$),
point F (0.0, $-0.007a^2-2.3826a+47.6$, $0.007a^2+1.3826a+52.4$),
point B (0.0, $0.006a^2+0.185a+32.00$, $-0.006a^2-1.185a+68.00$), and
point A (-a+40.8, 59.2, 0.0), or

on the straight lines CD, DE, EE', E'F, and BA (excluding the points C, F, B, and A), and
the coordinates (x,y,z) are, when $5.9 < a \leq 10.0$, within the range of a figure surrounded by straight lines CD, DE, EF, FB, BA and AC that connect the following 6 points:

point C (-a+60.0, 40.0, 0.0)
point D (-a+57.0, 0.0, 43.0),
point E ($-0.0131a^2-2.4253a+50.767$, 0.0, $0.0131a^2+1.4253a+49.233$),
point F (0.0, $0.0081a^2-2.6415a+48.602$, $-0.0081a^2+1.6415a+51.398$),
point B (0.0, $-0.0019a^2+0.225a+32.038$, $0.0019a^2-1.225a+67.962$), and
point A (-a+40.8, 59.2, 0.0), or

on the straight lines CD, DE, EF, and BA (excluding the points C, F, B, and A).
It is understood that in the refrigerant of the present disclosure, when the coordinates (x,y,z) satisfy the following requirements, a disproportionation reaction does not occur at 53 MPa and 150°C, GWP is 300 or less, and a refrigerating capacity (Cap) ratio relative to R410A is 70% or more.

<Requirements>

The coordinates (x,y,z) are, when $0 < a \leq 5.9$, within the range of a figure surrounded by straight lines CD, DE, EE', E'A', and A'C that connect the following 5 points:

point C (-a+60.0, 40.0, 0.0),
point D (-a+57.0, 0.0, 43.0),
point E ($-0.0152a^2-2.4021a+50.70$, 0.0, $0.00152a^2+1.4021a+49.30$),
point E' ($-0.0082a^2-2.0196a+12.2$, $0.0008a^2-0.242a+34.7$, $0.0074a^2+1.2616a+53.1$), and
point A' (-a+55.6, 44.4, 0.0), or

on the straight lines CD, DE, EE', and E'A' (excluding the points C and A'), and
the coordinates (x,y,z) are, when $5.9 < a \leq 10.0$, within the range of a figure surrounded by straight lines CD, DE, EF, FB', B'A', and A'C that connect the following 6 points:

point C (-a+60.0, 40.0, 0.0),
point D (-a+57.0, 0.0, 43.0),
point E ($-0.0131a^2-2.4253a+50.767$, 0.0, $0.00131a^2+1.4253a+49.233$),
point F (0.0, $0.0081a^2-2.6415a+48.602$, $-0.0081a^2+1.6415a+51.398$),
point B' (0.0. $-0.0137a^2+0.4304a+31.164$, $0.0137a^2-1.4304a+68.836$), and
point A' (-a+55.6, 44.4, 0.0), or

on the straight lines CD, DE, EF, and B'A' (excluding the points C, F, B', and A').
The results of tests (relative to R1234yf) are shown that were conducted for each mixed refrigerant as described above.

[Table 14]

| Item | | Unit | Ref.Ex. 2 | Com.Ex. 1-11 | Com.Ex. 1-12 | Com.Ex. 1-13 | Com.Ex 1-14 | Com.Ex. 1-15 | Com.Ex 1-16 | Com.Ex 1-17 |
|---|---|---|---|---|---|---|---|---|---|---|
| | | | | A" | B" | J | K | C | D | D' |
| Proportion of formulations | E-HFO-1132 | mass% | R1234yf | 77.9 | 0.0 | 28.2 | 19.2 | 60.0 | 57.0 | 58.3 |
| | R32 | mass% | | 22.1 | 4.7 | 0.0 | 9.0 | 40.0 | 0.0 | 17.7 |
| | R152a | mass% | | 0.0 | 95.3 | 71.8 | 71.8 | 0.0 | 43.0 | 24.0 |
| | HFO01132a | mass% | | 0.0 | 0.0 | 0.0 | 0.0 | 0.0 | 0.0 | 0.0 |
| GWP (AR4) | | - | 4 | 150 | 150 | 89 | 150 | 271 | 54 | 150 |
| COP ratio (relative to R1234yf) | | % | 100 | 100 | 108 | 106 | 106 | 101 | 103 | 102 |
| Refrigerating capacity ratio (relative to R1234yf) | | % | 100 | 302 | 104 | 140 | 141 | 312 | 188 | 235 |
| Power consumption of driving force | | % | 100 | 100 | 100 | 100 | 100 | 100 | 100 | 100 |
| Power consumption for heating | | % | 95 | 33 | 95 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 50 | 84 | 84 | 84 | 84 | 84 |
| Boiling point | | °C | -29.5 | -54.2 | -27.1 | -40.0 | -40.0 | -54.3 | -46.4 | -50.6 |
| Heating method | | system | Electric heater | Heat pump | Electric heater | Heat pump | Heat pump | Heat pump | Heat pump | Heat pump |

[Table 15]

| Item | | Unit | Ref.Ex. 2 | Com.Ex. 2-1 | Com.Ex. 2-2 | Ex. 2-1 | Com.Ex. 2-3 | Ex. 2-2 | Ex. 2-3 |
|---|---|---|---|---|---|---|---|---|---|
| | | | | A" | B"=J | K | C | D | D' |
| Proportion of formulations | E-HFO-1132 | mass% | R1234yf | 76.3 | 0.0 | 2.2 | 58.4 | 55.4 | 56.7 |
| | R32 | mass% | | 22.1 | 5.1 | 0.0 | 40.0 | 0.0 | 17.7 |
| | R152a | mass% | | 0.0 | 93.3 | 96.2 | 0.0 | 43.0 | 24.0 |
| | HFO-1132a | mass% | | 1.6 | 1.6 | 1.6 | 1.6 | 1.6 | 1.6 |
| GWP (AR4) | | - | 4 | 150 | 150 | 119 | 271 | 54 | 150 |
| COP ratio (relative to R1234yf) | | % | 100 | 100 | 106 | 106 | 101 | 103 | 101 |
| Refrigerating capacity ratio (relative to R1234yf) | | % | 100 | 306 | 109 | 105 | 316 | 191 | 238 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -55.3 | -40.0 | -40.0 | -55.6 | -48.8 | -52.4 |
| Heating method | | system | Electric heater | Heat pump | Heat pump | Heat pump | Heat pump | Heat pump | Heat pump |

[Table 16]

| Item | | Unit | Ref. Ex. 2 | Com.Ex. 3-1 | Com. Ex. 3-2 | Com.Ex. 3-3 | Com. Ex. 3-4 | Ex. 3-1 | Ex. 3-2 |
|---|---|---|---|---|---|---|---|---|---|
| | | | | A" | B" | J=K=O | C | D | D' |
| Proportion of formulations | E-HFO-1132 | mass% | R1234yf | 76.2 | 0.0 | 0.0 | 58.3 | 55.3 | 56.6 |
| | R32 | mass% | | 22.1 | 5.1 | 0.0 | 40.0 | 0.0 | 17.7 |
| | R152a | mass% | | 0.0 | 93.2 | 98.3 | 0.0 | 43.0 | 24.0 |
| | HF-O-1132-a | mass% | | 1.7 | 1.7 | 17 | 17 | 1.7 | 1.7 |
| GWP (AR4) | | - | 4 | 150 | 150 | 122 | 271 | 54 | 150 |
| COP ratio (relative to R1234yf) | | % | 100 | 100 | 106 | 106 | 100 | 103 | 101 |
| Refrigerating capacity ratio (relative to R1234yf) | | % | 100 | 307 | 109 | 102 | 316 | 191 | 239 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -55.4 | -41.3 | -40.0 | -55.7 | -49.0 | -52.5 |
| Heating method | | system | Electric heater | Heat pump | Heat pump | Heat pump | Heat pump | Heat pump | Heat pump |

[Table 17]

| Item | | Unit | Ref.Ex. 2 | Com.Ex. 4-8 | Com.Ex. 4-9 | Com.Ex. 4-10 | Com.Ex. 4-11 | Ex. 4-4 | Ex. 4-5 |
|---|---|---|---|---|---|---|---|---|---|
| | | | | A" | B" | O | C | D | D' |
| Proportion of formulations | E-HFO-1132 | mass% | R1234yf | 75.4 | 0.0 | 0.0 | 57.5 | 54.5 | 55.8 |
| | R32 | mass% | | 22.1 | 5.2 | 0.0 | 40.0 | 0.0 | 17.7 |
| | R152a | mass% | | 0.0 | 92.3 | 97.5 | 0.0 | 43.0 | 24.0 |
| | HFO-1132a | mass% | | 2.5 | 2.5 | 2.5 | 2.5 | 2.5 | 2.5 |
| GWP (AR4) | | - | 4 | 150 | 150 | 121 | 271 | 54 | 150 |
| COP ratio (relative to R1234yf) | | % | 100 | 100 | 105 | 105 | 100 | 103 | 101 |
| Refrigerating capacity ratio (relative to R1234yf) | | % | 100 | 309 | 112 | 104 | 319 | 193 | 240 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -55.9 | -46.9 | -46.4 | -56.3 | -50.2 | -53.4 |
| Heating method | | system | Electric heater | Heat pump | Heat pump | Heat pump | Heat pump | Heat pump | Heat pump |

[Table 18]

| Item | | Unit | Ref.Ex. 2 | Com.Ex. 5-7 | Com.Ex. 5-8 | Com.Ex. 5-9 | Com.Ex. 5-10 | Ex. 5-3 | Ex. 5-4 |
|---|---|---|---|---|---|---|---|---|---|
| | | | | A" | B" | O | C | D | D' |
| Proportion of formulations | E-HFO-1132 | mass% | R1234yf | 72.0 | 0.0 | 0.0 | 54.1 | 51.1 | 52.4 |
| | R32 | mass% | | 22.1 | 6.0 | 0.0 | 40.0 | 0.0 | 17.7 |
| | R152a | mass% | | 0.0 | 88.1 | 94.1 | 0.0 | 43.0 | 24.0 |
| | HFO-1132a | mass% | | 5.9 | 5.9 | 5.9 | 5.9 | 5.9 | 5.9 |
| GWP (AR4) | | - | 4 | 150 | 150 | 117 | 271 | 54 | 150 |
| COP ratio (relative to R1234yf) | | % | 100 | 100 | 102 | 102 | 100 | 102 | 100 |
| Refrigerating capacity ratio (relative to R1234yf) | | % | 100 | 318 | 124 | 115 | 328 | 200 | 248 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -58.2 | -63.0 | -64.3 | -58.8 | -54.8 | -56.8 |
| Heating method | | system | Electric heater | Heat pump | Heat pump | Heat pump | Heat pump | Heat pump | Heat pump |

[Table 19]

| Item | | Unit | Ref.Ex. 2 | Com.Ex. 6-8 | Com.Ex. 6-9 | Com.Ex. 6-10 | Com.Ex. 6-11 | Ex. 6-3 | Ex. 6-4 |
|---|---|---|---|---|---|---|---|---|---|
| | | | | A" | B" | O | C | D | D' |
| Proportion of formulations | E-HFO-1132 | mass% | R1234yf | 70.5 | 0.0 | 0.0 | 52.6 | 49.6 | 50.9 |
| | R32 | mass% | | 22.1 | 6.4 | 0.0 | 40.0 | 0.0 | 17.7 |
| | R152a | mass% | | 0.0 | 86.2 | 92.6 | 0.0 | 43.0 | 24.0 |
| | HFO-1132a | mass% | | 7.4 | 7.4 | 7.4 | 7.4 | 7.4 | 7.4 |
| GWP (AR4) | | - | 4 | 150 | 150 | 115 | 271 | 54 | 150 |
| COP ratio (relative to R1234yf) | | % | 100 | 99 | 101 | 101 | 100 | 101 | 100 |
| Refrigerating capacity ratio (relative to R1234yf) | | % | 100 | 322 | 129 | 119 | 332 | 203 | 252 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -59.1 | -67.1 | -68.8 | -59.8 | -56.6 | -58.1 |
| Heating method | | system | Electric heater | Heat pump | Heat pump | Heat pump | Heat pump | Heat pump | Heat pump |

[Table 20]

| Item | | Unit | Ref.Ex. 2 | Com.Ex. 7-8 | Com.Ex. 7-9 | Com.Ex. 7-10 | Com.Ex. 7-11 | Ex. 7-3 | Ex. 7-4 |
|---|---|---|---|---|---|---|---|---|---|
| | | | | A" | B" | O | C | D | D' |
| Proportion of formulations | E-HFO-1132 | mass% | R1234yf | 67.9 | 0.0 | 0.0 | 50.0 | 47.0 | 48.3 |
| | R32 | mass% | | 22.1 | 6.9 | 0.0 | 40.0 | 0.0 | 17.7 |
| | R152a | mass% | | 0.0 | 83.1 | 90.0 | 0.0 | 43.0 | 24.0 |
| | HFO-1132a | mass% | | 10.0 | 10.0 | 100 | 10.0 | 10.0 | 10.0 |
| GWP (AR4) | | - | 4 | 150 | 150 | 112 | 271 | 54 | 150 |
| COP ratio (relative to R1234yf) | | % | 100 | 99 | 100 | 100 | 99 | 101 | 100 |
| Refrigerating capacity ratio (relative to R1234yf) | | % | 100 | 329 | 139 | 127 | 339 | 209 | 258 |
| Power consumption of driving force | | % | 100 | 100 | 100 | 100 | 100 | 100 | 100 |
| Power consumption for heating | | % | 95 | 33 | 33 | 33 | 33 | 33 | 33 |
| Possible travel distance (without heating) | | % | 100 | 100 | 100 | 100 | 100 | 100 | 100 |
| Possible travel distance (with heating) | | % | 50 | 84 | 84 | 84 | 84 | 84 | 84 |
| Boiling point | | °C | -29.5 | -606 | -72.0 | -73.8 | -61.5 | -59.5 | -60.4 |
| Heating method | | system | Electric heater | Heat pump | Heat pump | Heat pump | Heat pump | Heat pump | Heat pump |

[Table 21]

| Item | | Unit | Ref.Ex 2 | Sam.2-12 | Sam.2-13 | Sam.2-14 | Sam.2-15 | Sam.2-16 | Sam.2-17 | Sam.2-18 |
|---|---|---|---|---|---|---|---|---|---|---|
| Proportion of formulations | E-HFO-1132 | mass% | R1234yf | 5.0 | 5.0 | 5.0 | 200 | 20.0 | 20.0 | 35.0 |
| | R32 | mass% | | 0.0 | 7.5 | 15.0 | 0.0 | 7.5 | 150 | 0.0 |
| | R152a | mass% | | 93.4 | 85.9 | 78.4 | 78.4 | 70.9 | 63.4 | 63.4 |
| | HFO-1132a | mass% | | 1.6 | 1.6 | 1.6 | 1.6 | 1.6 | 1.6 | 1.6 |
| GWP (AR4) | | - | 4 | 116 | 157 | 199 | 97 | 139 | 180 | 79 |
| COP ratio (relative to R1234yf) | | % | 100 | 106 | 106 | 105 | 105 | 105 | 105 | 105 |
| Refrigerating capacity ratio (relative to R1234yf) | | % | 100 | 109 | 120 | 133 | 132 | 145 | 159 | 157 |
| Power consumption of driving force | | % | 100 | 100 | 100 | 100 | 100 | 100 | 100 | 100 |
| Power consumption for heating | | % | 95 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 84 | 84 | 84 | 84 | 84 | 84 |
| Boiling point | | °C | -29.5 | -40.9 | -42.7 | -44.3 | -44.2 | -45.8 | -47.2 | -46.4 |
| Heating method | | system | Electric heater | Heat pump | Heat pump | Heat pump | Heat pump | Heat pump | Heat pump | Heat pump |

| Item | | Unit | Sam.2-19 | Sam.2-20 | Sam.2-21 | Sam.2-22 | Sam.2-23 | Sam.2-24 | Sam.2-25 | Sam.2-26 |
|---|---|---|---|---|---|---|---|---|---|---|
| Proportion of formulations | E-HFO-1132 | mass% | 35.0 | 35.0 | 50.0 | 50.0 | 50.0 | 65.0 | 65.0 | 65.0 |
| | R32 | mass% | 7.5 | 20.0 | 0.0 | 10.0 | 20.0 | 0.0 | 100 | 25.0 |
| | R152a | mass% | 55.9 | 43.4 | 48.4 | 38.4 | 28.4 | 33.4 | 23.4 | 8.4 |
| | CO2 | mass% | 1.6 | 1.6 | 1.6 | 1.6 | 1.6 | 1.6 | 1.6 | 1.6 |
| GWP (AR4) | | - | 120 | 189 | 61 | 116 | 171 | 42 | 97 | 180 |
| COP ratio (relative to R1234yf) | | % | 104 | 103 | 103 | 102 | 102 | 102 | 101 | 101 |
| Refrigerating capacity ratio (relative to R1234yf) | | % | 171 | 197 | 182 | 204 | 229 | 209 | 236 | 283 |
| Power consumption of driving force | | % | 100 | 100 | 100 | 100 | 100 | 100 | 100 | 100 |
| Power consumption for heating | | % | 33 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 84 | 84 | 84 | 84 | 84 | 84 | 84 | 84 |
| Boiling point | | °C | -48.0 | -50.1 | -48.2 | -50.3 | -52.0 | -49.9 | -52.1 | -54.5 |
| Heating method | | system | Heat pump | Heat pump | Heat pump | Heat pump | Heat pump | Heat pump | Heat pump | Heat pump |
| Disproportionation reaction (5Mpa) | | - | - | - | Non-explosion | Non-explosion | Non-explosion | Explosion | Explosion | Explosion |

[Table 22]

| Item | | Unit | Ref.Ex 2 | Sam.3-12 | Sam.3-13 | Sam.3-14 | Sam.3-15 | Sam.3-16 | Sam.3-17 | Sam.3-18 |
|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 93.3 | 88.3 | 78.3 | 78.3 | 70.8 | 63.3 | 63.3 |
| | HFO-1132a | mass% | | 1.7 | 1.7 | 1.7 | 1.7 | 1.7 | 1.7 | 1.7 |
| GWP (AR4) | | - | 4 | 116 | 143 | 198 | 97 | 139 | 180 | 79 |
| COP ratio (relative to R1234yf) | | % | 100 | 106 | 106 | 105 | 105 | 105 | 105 | 104 |
| Refrigerating capacity ratio (relative to R1234yf) | | % | 100 | 109 | 117 | 133 | 133 | 146 | 159 | 157 |
| Power consumption of driving force | | % | 100 | 100 | 100 | 100 | 100 | 100 | 100 | 100 |
| Power consumption for heating | | % | 95 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 84 | 84 | 84 | 84 | 84 | 84 |
| Boiling point | | °C | -29.5 | -41.6 | -42.7 | -44.8 | -44.6 | -46.1 | -47.5 | -46.6 |
| Heating method | | system | Electric heater | Heat pump | Heat pump | Heat pump | Heat pump | Heat pump | Heat pump | Heat pump |

| Item | | Unit | Sam.3-19 | Sam.3-20 | Sam.3-21 | Sam.3-22 | Sam.3-23 | Sam.3-24 | Sam.3-25 | Sam.3-26 |
|---|---|---|---|---|---|---|---|---|---|---|
| Proportion of formulations | E-HFO-1132 | mass% | 35.0 | 35.0 | 50.0 | 50.0 | 50.0 | 65.0 | 65.0 | 65.0 |
| | R32 | mass% | 7.5 | 20.0 | 0.0 | 100 | 20.0 | 0.0 | 10.0 | 25.0 |
| | R152a | mass% | 55.8 | 43.3 | 48.3 | 38.3 | 28.3 | 33.3 | 23.3 | 8.3 |
| | CO2 | mass% | 1.7 | 1.7 | 1.7 | 1.7 | 1.7 | 1.7 | 1.7 | 1.7 |
| GWP (AR4) | | - | 120 | 189 | 60 | 116 | 171 | 42 | 97 | 180 |
| COP ratio (relative to R1234yf) | | % | 104 | 103 | 103 | 102 | 102 | 102 | 101 | 101 |
| Refrigerating capacity ratio (relative to R1234yf) | | % | 171 | 197 | 182 | 205 | 229 | 210 | 237 | 283 |
| Power consumption of driving force | | % | 100 | 100 | 100 | 100 | 100 | 100 | 100 | 100 |
| Power consumption for heating | | % | 33 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 84 | 84 | 84 | 84 | 84 | 84 | 84 | 84 |
| Boiling point | | °C | -48.2 | -50.3 | -48.4 | -50.4 | -52.1 | -50.1 | -52.2 | -54.6 |
| Heating method | | system | Heat pump | Heat pump | Heat pump | Heat pump | Heat pump | Heat pump | Heat pump | Heat pump |
| Disproportionation reaction (5Mpa) | | - | - | - | - | Non-explosion | Non-explosion | Non-explosion | Explosion | Explosion | Explosion |

[Table 23]

| Item | | Unit | Ref.Ex. 2 | Sam. 4-28 | Sam.4-29 | Sam.4-30 | Sam.4-31 | Sam.4-32 | Sam.4-33 | Sam.4-34 |
|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 92.5 | 87.5 | 77.5 | 77.5 | 70.0 | 62.5 | 62.5 |
| | HFO-1132a | mass% | | 2.5 | 2.5 | 2.5 | 2.5 | 2.5 | 2.5 | 2.5 |
| GWP (AR4) | | - | 4 | 115 | 142 | 197 | 96 | 138 | 179 | 78 |
| COP ratio (relative to R1234yf) | | % | 100 | 105 | 105 | 105 | 105 | 105 | 104 | 104 |
| Refrigerating capacity ratio (relative to R1234yf) | | % | 100 | 112 | 119 | 136 | 135 | 149 | 162 | 160 |
| Power consumption of driving force | | % | 100 | 100 | 100 | 100 | 100 | 100 | 100 | 100 |
| Power consumption for heating | | % | 95 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 84 | 84 | 84 | 84 | 84 | 84 |
| Boiling point | | °C | -29.5 | -46.7 | -47.3 | -48.5 | -47.6 | -48.8 | -49.8 | -48.6 |
| Heating method | | system | Electric heater | Heat pump | Heat pump | Heat pump | Heat pump | Heat pump | Heat pump | Heat pump |

| Item | | Unit | Sam.4-35 | Sam.4-36 | Sam.4-37 | Sam.4-38 | Sam.4-39 | Sam.4-40 | Sam.4-41 | Sam.4-42 |
|---|---|---|---|---|---|---|---|---|---|---|
| Proportion of formulations | E-HFO-1132 | mass% | 35.0 | 35.0 | 50.0 | 50.0 | 50.0 | 60.0 | 60.0 | 60.0 |
| | R32 | mass% | 7.5 | 20.0 | 0.0 | 10.0 | 20.0 | 0.0 | 10.0 | 25.0 |
| | R152a | mass% | 55.0 | 42.5 | 47.5 | 37.5 | 27.5 | 37.5 | 27.5 | 12.5 |
| | CO2 | mass% | 2.5 | 2.5 | 2.5 | 2.5 | 2.5 | 2.5 | 2.5 | 2.5 |
| GWP (AR4) | | - | 119 | 188 | 59 | 115 | 170 | 47 | 102 | 185 |
| COP ratio (relative to R1234yf) | | % | 104 | 103 | 103 | 102 | 101 | 102 | 101 | 101 |
| Refrigerating capacity ratio (relative to R1234yf) | | % | 174 | 201 | 185 | 208 | 233 | 203 | 229 | 273 |
| Power consumption of driving force | | % | 100 | 100 | 100 | 100 | 100 | 100 | 100 | 100 |
| Power consumption for heating | | % | 33 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 84 | 84 | 84 | 84 | 84 | 84 | 84 | 84 |
| Boiling point | | °C | -49.9 | -51.7 | -49.8 | -51.6 | -53.1 | -50.7 | -52.6 | -54.8 |
| Heating method | | system | Heat pump | Heat pump | Heat pump | Heat pump | Heat pump | Heat pump | Heat pump | Heat pump |
| Disproportionation reaction (5Mpa) | | - | - | - | Non-explosion | Non-explosion | Non-explosion | Explosion | Explosion | Explosion |

[Table 24]

| Item | | Unit | Ref.Ex. 2 | Sam.5-28 | Sam.5-29 | Sam.5-30 | Sam.5-31 | Sam.5-32 | Sam.5-33 | Sam.5-34 |
|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 89.1 | 84.1 | 74.1 | 74.1 | 66.6 | 59.1 | 59.1 |
| | H FO-1132a | mass% | | 5.9 | 5.9 | 5.9 | 5.9 | 5.9 | 5.9 | 5.9 |
| GWP (AR4) | | - | 4 | 111 | 138 | 193 | 92 | 133 | 175 | 74 |
| COP ratio (relative to R1234yf) | | % | 100 | 102 | 102 | 103 | 103 | 103 | 103 | 103 |
| Refrigerating capacity ratio (relative to R1234yf) | | % | 100 | 122 | 130 | 148 | 147 | 161 | 175 | 172 |
| Power consumption of driving force | | % | 100 | 100 | 100 | 100 | 100 | 100 | 100 | 100 |
| Power consumption for heating | | % | 95 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 84 | 84 | 84 | 84 | 84 | 84 |
| Boiling point | | °C | -29.5 | -61.9 | -61.1 | -60.1 | -57.4 | -57.4 | -57.4 | -55.4 |
| Heating method | | system | Electric heater | Heat pump | Heat pump | Heat pump | Heat pump | Heat pump | Heat pump | Heat pump |

| Item | | Unit | Sam.5-35 | Sam.4-36 | Sam.5-37 | Sam.5-38 | Sam.5-39 | Sam.5-40 | Sam.5-41 | Sam.5-42 |
|---|---|---|---|---|---|---|---|---|---|---|
| Proportion of formulations | E-HFO-1132 | mass% | 35.0 | 35.0 | 45.0 | 45.0 | 45.0 | 55.0 | 55.0 | 55.0 |
| | R32 | mass% | 7.5 | 20.0 | 0.0 | 10.0 | 20.0 | 0.0 | 10.0 | 20.0 |
| | R152a | mass% | 51.6 | 39.1 | 49.1 | 39.1 | 29.1 | 39.1 | 29.1 | 19.1 |
| | $CO_2$ | mass% | 5.9 | 5.9 | 5.9 | 5.9 | 5.9 | 5.9 | 5.9 | 5.9 |
| GWP (AR4) | | - | 115 | 184 | 61 | 116 | 172 | 49 | 104 | 159 |
| COP ratio (relative to R1234yf) | | % | 102 | 102 | 102 | 101 | 101 | 101 | 101 | 100 |
| Refrigerating capacity ratio (relative to R1234yf) | | % | 187 | 215 | 189 | 212 | 237 | 207 | 233 | 261 |
| Power consumption of driving force | | % | 100 | 100 | 100 | 100 | 100 | 100 | 100 | 100 |
| Power consumption for heating | | % | 33 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 84 | 84 | 84 | 84 | 84 | 84 | 84 | 84 |
| Boiling point | | °C | -559 | -56.8 | -54.9 | -55.9 | -56.8 | -54.7 | -56.0 | -57.1 |
| Heating method | | system | Heat pump | Heat pump | Heat pump | Heat pump | Heat pump | Heat pump | Heat pump | Heat pump |
| Disproportionation reaction (5Mpa) | | - | - | - | Non-explosion | Non-explosion | Non-explosion | Explosion | Explosion | Explosion |

[Table 25]

| Item | | Unit | Ref.Ex. 2 | Sam.6-28 | Sam.6-29 | Sam.6-30 | Sam.6-31 | Sam.6-32 | Sam.6-33 | Sam.6-34 |
|---|---|---|---|---|---|---|---|---|---|---|
| Proportion of formulations | E-HFO-1132 | mass% | | 5.0 | 5.0 | 5.0 | 20.0 | 20.0 | 20.0 | 30.0 |
| | R32 | mass% | R1234yf | 0.0 | 5.0 | 15.0 | 0.0 | 7.5 | 15.0 | 00 |
| | R152a | mass% | | 876 | 82.6 | 726 | 72.6 | 65.1 | 57.6 | 62.6 |
| | HFO-1132a | mass% | | 7.4 | 7.4 | 7.4 | 7.4 | 7.4 | 7.4 | 7.4 |
| GWP (AR4) | | - | 4 | 109 | 136 | 191 | 90 | 132 | 173 | 78 |
| COP ratio (relative to R1234yf) | | % | 100 | 101 | 102 | 102 | 102 | 102 | 102 | 102 |
| Refrigerating capacity ratio (relative to R1234yf) | | % | 100 | 127 | 136 | 153 | 152 | 166 | 181 | 169 |
| Power consumption of driving force | | % | 100 | 100 | 100 | 100 | 100 | 100 | 100 | 100 |
| Power consumption for heating | | % | 95 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 84 | 84 | 84 | 84 | 84 | 84 |
| Boiling point | | °C | -29.5 | -66.0 | -65.0 | -63.6 | -60.5 | -60.1 | -60.0 | -58.4 |
| Heating method | | system | Electric heater | Heat pump | Heat pump | Heat pump | Heat pump | Heat pump | Heat pump | Heat pump |

| Item | | Unit | Sam.6-35 | Sam.6-36 | Sam.6-37 | Sam.6-38 | Sam.6-39 | Sam.6-40 | Sam.6-41 | Sam.6-42 |
|---|---|---|---|---|---|---|---|---|---|---|
| Proportion of formulations | E-HFO-1132 | mass% | 30.0 | 300 | 42.0 | 42.0 | 42.0 | 55.0 | 55.0 | 55.0 |
| | R32 | mass% | 7.5 | 20.0 | 00 | 100 | 20.0 | 00 | 10.0 | 20.0 |
| | R152a | mass% | 55.1 | 42.6 | 50.6 | 40.6 | 30.6 | 37.6 | 27.6 | 17.6 |
| | CO2 | mass% | 7.4 | 7.4 | 7.4 | 7.4 | 7.4 | 7.4 | 7.4 | 7.4 |
| GWP (AR4) | | - | 119 | 188 | 63 | 118 | 173 | 47 | 102 | 157 |
| COP ratio (relative to R1234yf) | | % | 102 | 102 | 102 | 101 | 101 | 101 | 100 | 100 |
| Refrigerating capacity ratio (relative to R1234yf) | | % | 184 | 211 | 190 | 212 | 237 | 213 | 240 | 269 |
| Power consumption of driving force | | % | 100 | 100 | 100 | 100 | 100 | 100 | 100 | 100 |
| Power consumption for heating | | % | 33 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 84 | 84 | 84 | 84 | 84 | 84 | 84 | 84 |
| Boiling point | | °C | -58.5 | -58.9 | -57.0 | -57.7 | -58.4 | -56.4 | -57.5 | -58.4 |
| Heating method | | system | Heat pump | Heat pump | Heat pump | Heat pump | Heat pump | Heat pump | Heat pump | Heat pump |
| Disproportionation reaction (5Mpa) | | - | - | - | Non-explosion | Non-explosion | Non-explosion | Explosion | Explosion | Explosion |

[Table 26]

| Item | | Unit | Ref.Ex. 2 | Sam.7-28 | Sam.7-29 | Sam.7-30 | Sam.7-31 | Sam.7-32 | Sam.7-33 | Sam.7-34 |
|---|---|---|---|---|---|---|---|---|---|---|
| Proportion of formulations | E-HFO-1132 | mass% | R1234yf | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 85.0 | 80.0 | 70.0 | 70.0 | 62.5 | 55.0 | 55.0 |
| | H FO-1132a | mass% | | 100 | 100 | 10.0 | 10.0 | 10.0 | 100 | 100 |
| GWP (AR4) | | - | 4 | 106 | 133 | 188 | 87 | 128 | 170 | 69 |
| COP ratio (relative to R1234yf) | | % | 100 | 100 | 101 | 101 | 102 | 102 | 101 | 101 |
| Refrigerating capacity ratio (relative to R1234yf) | | % | 100 | 136 | 144 | 163 | 161 | 176 | 191 | 187 |
| Power consumption of driving force | | % | 100 | 100 | 100 | 100 | 100 | 100 | 100 | 100 |
| Power consumption for heating | | % | 95 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 50 | 84 | 84 | 84 | 84 | 84 | 84 | 84 |
| Boiling point | | °C | -29.5 | -70.9 | -69.7 | -68.0 | -64.5 | -63.9 | -63.5 | -61.0 |
| Heating method | | system | Electric heater | Heat pump | Heat pump | Heat pump | Heat pump | Heat pump | Heat pump | Heat pump |

| Item | | Unit | Sam.7-35 | Sam.7-36 | Sam.7-37 | Sam.7-38 | Sam.7-39 | Sam.7-40 | Sam.7-41 | Sam.7-42 |
|---|---|---|---|---|---|---|---|---|---|---|
| Proportion of formulations | E-HFO-1132 | mass% | 35.0 | 35.0 | 45.0 | 45.0 | 45.0 | 52.5 | 52.5 | 52.5 |
| | R32 | mass% | 7.5 | 20.0 | 00 | 10.0 | 20.0 | 0.0 | 100 | 20.0 |
| | R152a | mass% | 47.5 | 35.0 | 45.0 | 35.0 | 25.0 | 37.5 | 27.5 | 175 |
| | CO2 | mass% | 10.0 | 100 | 100 | 10.0 | 10.0 | 10.0 | 100 | 100 |
| GWP (AR4) | | - | 110 | 179 | 56 | 111 | 167 | 47 | 102 | 157 |
| COP ratio (relative to R1234yf) | | % | 101 | 100 | 101 | 100 | 100 | 100 | 100 | 99 |
| Refrigerating capacity ratio (relative to R1234yf) | | % | 204 | 233 | 205 | 229 | 256 | 219 | 246 | 275 |
| Power consumption of driving force | | % | 100 | 100 | 100 | 100 | 100 | 100 | 100 | 100 |
| Power consumption for heating | | % | 33 | 33 | 33 | 33 | 33 | 33 | 33 | 33 |
| Possible travel distance (without heating) | | % | 100 | 100 | 100 | 100 | 100 | 100 | 100 | 100 |
| Possible travel distance (with heating) | | % | 84 | 84 | 84 | 84 | 84 | 84 | 84 | 84 |
| Boiling point | | °C | -61.0 | -61.2 | -59.7 | -60.1 | -60.6 | -59.0 | -59.7 | -60.4 |
| Heating method | | system | Heat pump | Heat pump | Heat pump | Heat pump | Heat pump | Heat pump | Heat pump | Heat pump |
| Disproportionation reaction (5Mpa) | | - | - | - | - | Non-explosion | Non-explosion | Non-explosion | Explosion | Explosion | Explosion |

EP 4 640 788 A1

The coordinates of each point were obtained by the least squares method as follows.

[Table 27]

| Point A" | | | | | | | | |
|---|---|---|---|---|---|---|---|---|
| a=HFO-1132a | mass% | 0.0 | 1.6 | 1.7 | 2.5 | 5.9 | 7.4 | 10.0 |
| E-HFO-1132 | mass% | 77.9 | 76.3 | 76.2 | 75.4 | 72.0 | 70.5 | 67.9 |
| R32 | mass% | 22.1 | 22.1 | 22.1 | 22.1 | 22.1 | 22.1 | 22.1 |
| R152a | mass% | 0.0 | 0.0 | 0.0 | 0.0 | 0.0 | 0.0 | 0.0 |
| E-HFO-1132 Approximation formula | | $-a+77.9$ | | | | | | |
| R32 Approximation formula | | 22.1 | | | | | | |
| R152a Approximation formula | | 0.0 | | | | | | |

| Point B" | | | | | | | | | |
|---|---|---|---|---|---|---|---|---|---|
| a=HFO-1132a | mass% | 0.0 | 1.6 | 1.7 | 1.7 | 2.5 | 5.9 | 7.4 | 10.0 |
| E-HFO-1132 | mass% | 0.0 | 0.0 | 0.0 | 0.0 | 0.0 | 0.0 | 0.0 | 0.0 |
| R32 | mass% | 4.7 | 5.1 | 5.1 | 5.1 | 5.2 | 6.0 | 6.4 | 6.9 |
| R152a | mass% | 95.3 | 93.3 | 93.2 | 93.2 | 92.3 | 88.1 | 86.2 | 83.1 |
| E-HFO-1132 Approximation formula | | 0.0 | | | | 0.0 | | | |
| R32 Approximation formula | | $-0.1471a^2+0.4853a+4.7$ | | | | $-0.0014a^2-0.2396a+4.657$ | | | |
| R152a Approximation formula | | $0.1471a^2-1.4853a+95.3$ | | | | $0.0014a^2-1.2396a+95.343$ | | | |

[Table 28]

| Point J | | | |
|---|---|---|---|
| a=HFO-1132a | mass% | 0.0 | 1.6 |
| E-HFO-1132 | mass% | 28.2 | 0.0 |
| R32 | mass% | 0.0 | 5.1 |
| R152a | mass% | 71.8 | 93.3 |
| E-HFO-1132 Approximation formula | | $-17.625a+28.2$ | |
| R32 Approximation formula | | $3.1875a$ | |
| R152a Approximation formula | | $13.438a+71.8$ | |

| PointK | | | | | |
|---|---|---|---|---|---|
| a=HFO-1132a | mass% | 0.0 | 1.6 | 1.6 | 1.7 |
| E-HFO-1132 | mass% | 19.2 | 2.2 | 2.2 | 0.0 |
| R32 | mass% | 9.0 | 0 | 0 | 0.0 |
| R152a | mass% | 71.8 | 96.2 | 96.2 | 98.3 |
| E-HFO-1132 Approximation formula | | $-10.625a+19.2$ | | $-22.0a+37.4$ | |
| R32 Approximation formula | | $5.625a+9.0$ | | 0.0 | |
| R152a Approximation formula | | $15.25a+71.8$ | | $21.0a+62.6$ | |

[Table 29]

| Point D' | | | | | | | | |
|---|---|---|---|---|---|---|---|---|
| a=HFO-1132a | mass% | 0.0 | 1.6 | 1.7 | 2.5 | 5.9 | 7.4 | 10.0 |
| E-HFO-1132 | mass% | 58.3 | 56.7 | 56.6 | 55.8 | 52.4 | 50.9 | 48.3 |
| R32 | mass% | 17.7 | 17.7 | 17.7 | 17.7 | 17.7 | 17.7 | 17.7 |
| R152a | mass% | 24.0 | 24.0 | 24.0 | 24.0 | 24.0 | 24.0 | 24.0 |
| E-HFO-1132 Approximation formula | | -a+58.3 | | | | | | |
| R32 Approximation formula | | 17.7 | | | | | | |
| R152a Approximation formula | | 24.0 | | | | | | |

It is understood, based on these results, that in the refrigerant of the present disclosure, when coordinates (x,y,z) satisfy the following requirements, a disproportionation reaction does not occur at 53 MPa and 150°C, GWP is 150 or less, and a boiling point is -40°C or less.

<Requirements>

The coordinates (x,y,z) are, when $0 < a \leq 1.6$, within the range of a figure surrounded by straight lines D'D, DJ, JK, and KD' that connect the following 4 points:

point D' (-a+58.3, 17.7, 24.0),
point D (-a+57.0, 0.0, 43.0),
point J (-17.625a+28.2, 3.1875a, 13.438a+71.8), and
point K (-10.625a+19.2, 5.625a+9.0, 15.25a+71.8), or

on the straight lines D'D, DJ, JK, and KD', and

the coordinates (x,y,z) are, when $1.6 < a \leq 1.7$, within the range of a figure surrounded by straight lines D'D, DJ, JK, and KD' that connect the following 4 points:

point D' (-a+58.3, 17.7, 24.0),
point D (-a+57.0, 0.0, 43.0),
point J (-17.625a+28.2, 3.1875a, 13.438a+71.8), and
point K (-22.0a+37.4, 0.0, 21.0a+62.6), or

on the straight lines D'D, DJ, JK, and KD', and
the coordinates (x,y,z) are, when $1.7 < a \leq 10.0$, within the range of a figure surrounded by straight lines D'D, DO, OB", and B"D' that connect the following 4 points:

point D' (-a+58.3, 17.7, 24.0),
point D (-a+57.0, 0.0, 43.0),
point O (0.0, 0.0, -a+100.0), and
point B" (0.0, $-0.0014a^2-0.2396a+4.657$, $0.0014a^2-1.2396a+95.343$), or

on the straight lines D'D, DO, and B"D' (excluding the points O and B").

The results of tests (relative to R404A) are shown that were conducted for each mixed refrigerant as described above.

[Table 30]

| Item | | Unit | Ref.Ex. 3 | Com.Ex 1-18 | Com.Ex 1-19 | Com.Ex. 1-20 | Com.Ex 1-21 | Com.Ex. 1-22 | Com.Ex. 1-23 | Com.Ex. 1-24 |
|---|---|---|---|---|---|---|---|---|---|---|
| | | | | A" | B" | L | M | C | D | D' |
| Proportion of formulations | E-HFO-1132 | mass% | R404A | 77.9 | 0.0 | 16.9 | 25.9 | 60.0 | 57.0 | 58.3 |
| | R32 | mass% | | 22.1 | 4.7 | 8.5 | 0.0 | 40.0 | 0.0 | 17.7 |
| | R152a | mass% | | 0.0 | 95.3 | 74.6 | 74.1 | 0.0 | 43.0 | 23.9 |
| | HFO-1132a | mass% | | 0.0 | 0.0 | 0.0 | 0.0 | 0.0 | 0.0 | 0.0 |
| GWP (AR4) | | - | 3922 | 150 | 150 | 150 | 92 | 271 | 54 | 150 |
| COP ratio (relative to R404A) | | % | 100 | 103 | 110 | 109 | 108 | 103 | 105 | 104 |
| Refrigerating capacity ratio (relative to R404A) | | % | 100 | 165 | 53 | 70 | 70 | 171 | 98 | 125 |

| Item | | Unit | Ref.Ex. 3 | Com.Ex 4-12 | Com.Ex 4-13 | Ex. 4-6 | Ex. 4-7 | Com.Ex. 4-14 | Ex. 4-8 | Ex. 4-9 |
|---|---|---|---|---|---|---|---|---|---|---|
| | | | | A" | B" | L | M | C | D | D' |
| Proportion of formulations | E-HFO-1132 | mass% | R404A | 75.4 | 0.0 | 12.8 | 21.2 | 57.5 | 54.5 | 55.8 |
| | R32 | mass% | | 22.1 | 5.2 | 8.1 | 0.0 | 40.0 | 0.0 | 17.7 |
| | R152a | mass% | | 0.0 | 92.3 | 76.6 | 76.3 | 0.0 | 43.0 | 24.0 |
| | HFO-1132a | mass% | | 2.5 | 2.5 | 2.5 | 2.5 | 2.5 | 2.5 | 2.5 |
| GWP (AR4) | | - | 3922 | 150 | 150 | 150 | 95 | 271 | 54 | 150 |
| COP ratio (relative to R404A) | | % | 100 | 102 | 108 | 107 | 107 | 103 | 105 | 103 |
| Refrigerating capacity ratio (relative to R404A) | | % | 100 | 169 | 57 | 70 | 70 | 174 | 101 | 128 |

[Table 31]

| Item | | Unit | Ref.Ex. 3 | Com.Ex. 5-11 | Com.Ex. 5-12 | Ex. 5-5 | Ex. 5-6 | Com.Ex. 5-13 | Ex. 5-7 | Ex. 5-8 |
|---|---|---|---|---|---|---|---|---|---|---|
| | | | | A" | B" | L | M | C | D | D' |
| Proportion of formulations | E-HFO-1132 | mass% | | 72.0 | 0.0 | 7.1 | 14.9 | 54.1 | 51.1 | 52.4 |
| | R32 | mass% | R1234yf | 22.1 | 6.0 | 7.6 | 0.0 | 40.0 | 0.0 | 17.7 |
| | R152a | mass% | | 0.0 | 88.1 | 79.4 | 79.2 | 0.0 | 43.0 | 24.0 |
| | HFO-1132a | mass% | | 5.9 | 5.9 | 5.9 | 5.9 | 5.9 | 5.9 | 5.9 |
| GWP (AR4) | | - | 3922 | 150 | 150 | 150 | 98 | 271 | 54 | 150 |
| COP ratio (relative to R1234yf) | | % | 100 | 102 | 106 | 106 | 106 | 102 | 104 | 103 |
| Refrigerating capacity ratio (relative to R1234yf) | | % | 100 | 174 | 62 | 70 | 70 | 180 | 104 | 132 |

| Item | | Unit | Ref.Ex. 3 | Com.Ex. 6-11 | Com.Ex. 6-12 | Ex. 6-5 | Ex. 6-6 | Com.Ex. 6-13 | Ex. 6-7 | Ex. 6-8 |
|---|---|---|---|---|---|---|---|---|---|---|
| | | | | A" | B" | L | M | C | D | D' |
| Proportion of formulations | E-HFO-1132 | mass% | R404A | 70.5 | 0.0 | 4.6 | 12.2 | 52.6 | 49.6 | 50.9 |
| | R32 | mass% | | 22.1 | 6.4 | 7.4 | 0.0 | 40.0 | 0.0 | 17.7 |
| | R152a | mass% | | 0.0 | 86.2 | 80.6 | 80.4 | 0.0 | 43.0 | 24.0 |
| | HFO-1132a | mass% | | 7.4 | 7.4 | 7.4 | 7.4 | 7.4 | 7.4 | 7.4 |
| GWP (AR4) | | - | 3922 | 150 | 150 | 150 | 100 | 271 | 54 | 150 |
| COP ratio (relative to R404A) | | % | 100 | 102 | 105 | 105 | 105 | 102 | 104 | 102 |
| Refrigerating capacity ratio (relative to R404A) | | % | 100 | 176 | 65 | 70 | 70 | 182 | 106 | 134 |

[Table 32]

| Item | | Unit | Ref.Ex. 3 | Com.Ex. 7-11 | Com.Ex. 7-12 | Ex. 7-5 | Ex. 7-6 | Com.Ex. 7-13 | Ex. 7-7 | Ex. 7-8 |
|---|---|---|---|---|---|---|---|---|---|---|
| | | | | A" | B" | L | M | C | D | D' |
| Proportion of formulations | E-HFO-1132 | mass% | R404A | 67.9 | 0.0 | 0.5 | 7.6 | 50.0 | 47.0 | 48.3 |
| | R32 | mass% | | 22.1 | 6.9 | 7.0 | 0.0 | 40.0 | 0.0 | 17.7 |
| | R152a | mass% | | 0.0 | 83.1 | 82.5 | 82.4 | 0.0 | 43.0 | 24.0 |
| | HFO-1132a | mass% | | 10.0 | 10.0 | 10.0 | 100 | 10.0 | 10.0 | 10.0 |
| GWP (AR4) | | - | 3922 | 150 | 150 | 150 | 102 | 271 | 54 | 150 |
| COP ratio (relative to R1234yf) | | % | 100 | 101 | 104 | 104 | 104 | 101 | 103 | 102 |
| Refrigerating capacity ratio (relative to R1234yf) | | % | 100 | 181 | 69 | 70 | 70 | 186 | 109 | 137 |

60

[Table 33]

| Item | | Unit | Ref.Ex. 3 | Sam.4-42 | Sam.4-43 | Sam.4-44 | Sam.4-45 | Sam.4-46 | Sam. 4-47 | Sam.4-48 |
|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 92.5 | 87.5 | 77.5 | 77.5 | 70.0 | 62.5 | 62.5 |
| | HFO-1132a | mass% | | 2.5 | 2.5 | 2.5 | 2.5 | 2.5 | 2.5 | 2.5 |
| GWP (AR4) | | - | 3922 | 115 | 142 | 197 | 96 | 138 | 179 | 78 |
| COP ratio (relative to R1234yf) | | % | 100 | 108 | 108 | 108 | 107 | 107 | 107 | 107 |
| Refrigerating capacity ratio (relative to R1234yf) | | % | 100 | 56 | 60 | 69 | 69 | 76 | 84 | 82 |

| Item | | Unit | Sam.4-49 | Sam.4-50 | Sam.4-51 | Sam.4-52 | Sam.4-53 | Sam.4-54 | Sam. 4-55 | Sam.4-56 |
|---|---|---|---|---|---|---|---|---|---|---|
| Proportion of formulations | E-HFO-1132 | mass% | 350 | 35.0 | 50.0 | 50.0 | 50.0 | 60.0 | 60.0 | 60.0 |
| | R32 | mass% | 7.5 | 200 | 0.0 | 10.0 | 20.0 | 0.0 | 10.0 | 25.0 |
| | R152a | mass% | 55.0 | 42.5 | 47.5 | 37.5 | 27.5 | 37.5 | 27.5 | 12.5 |
| | CO2 | mass% | 2.5 | 2.5 | 2.5 | 2.5 | 2.5 | 2.5 | 2.5 | 2.5 |
| GWP (AR4) | | - | 119 | 188 | 59 | 115 | 170 | 47 | 102 | 185 |
| COP ratio (relative to R1234yf) | | % | 106 | 105 | 105 | 104 | 103 | 104 | 103 | 103 |
| Refrigerating capacity ratio (relative to R1234yf) | | % | 91 | 105 | 96 | 109 | 124 | 107 | 121 | 147 |
| Disproportionation reaction (5Mpa) | | - | - | - | Non-explo-sion | Non-explo-sion | Non-explo-sion | Explosion | Explosion | Explosion |

[Table 34]

| Item | | Unit | Ref.Ex. 3 | Sam.5-42 | Sam.5-43 | Sam.5-44 | Sam.5-45 | Sam.5-46 | Sam.5-47 | Sam.5-48 |
|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 89.1 | 84.1 | 74.1 | 74.1 | 66.6 | 59.1 | 59.1 |
| | H FO-1132a | mass% | | 5.9 | 5.9 | 5.9 | 5.9 | 5.9 | 5.9 | 5.9 |
| GWP (AR4) | | - | 3922 | 111 | 138 | 193 | 92 | 133 | 175 | 74 |
| COP ratio (relative to R1234yf) | | % | 100 | 106 | 106 | 106 | 106 | 106 | 105 | 105 |
| Refrigerating capacity ratio (relative to R1234yf) | | % | 100 | 61 | 66 | 75 | 75 | 82 | 90 | 89 |

| Item | | Unit | Sam.5-49 | Sam.5-50 | Sam.5-51 | Sam.5-52 | Sam.5-53 | Sam.5-54 | Sam.5-55 | Sam.5-56 |
|---|---|---|---|---|---|---|---|---|---|---|
| Proportion of formulations | E-HFO-1132 | mass% | 35.0 | 35.0 | 45.0 | 45.0 | 45.0 | 55.0 | 55.0 | 55.0 |
| | R32 | mass% | 7.5 | 20.0 | 0.0 | 10.0 | 20.0 | 0.0 | 10.0 | 20.0 |
| | R152a | mass% | 51.6 | 39.1 | 49.1 | 39.1 | 29.1 | 39.1 | 29.1 | 19.1 |
| | CO2 | mass% | 5.9 | 5.9 | 5.9 | 5.9 | 5.9 | 5.9 | 5.9 | 5.9 |
| GWP (AR4) | | - | 115 | 184 | 61 | 116 | 172 | 49 | 104 | 159 |
| COP ratio (relative to R1234yf) | | % | 105 | 108 | 105 | 104 | 103 | 104 | 103 | 102 |
| Refrigerating capacity ratio (relative to R1234yf) | | % | 97 | 122 | 98 | 111 | 125 | 109 | 123 | 140 |
| Disproportionation reaction (5Mpa) | | - | - | - | Non-explo-sion | Non-explo-sion | Non-explo-sion | Explosion | Explosion | Explosion |

[Table 35]

| Item | | Unit | Ref.Ex. 3 | Sam.6-42 | Sam.6-43 | Sam.6-44 | Sam.6-45 | Sam.6-46 | Sam.6-47 | Sam.6-48 |
|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 87.6 | 82.6 | 72.6 | 72.6 | 65.1 | 57.6 | 57.6 |
| | H FO-1132a | mass% | | 7.4 | 7.4 | 7.4 | 7.4 | 7.4 | 7.4 | 7.4 |
| GWP (AR4) | | - | 3922 | 109 | 136 | 191 | 90 | 132 | 173 | 72 |
| COP ratio (relative to R1234yf) | | % | 100 | 105 | 105 | 105 | 105 | 105 | 105 | 105 |
| Refrigerating capacity ratio (relative to R1234yf) | | % | 100 | 64 | 68 | 78 | 77 | 85 | 93 | 91 |

| | Item | Unit | Sam.6-49 | Sam.6-50 | Sam.6-51 | Sam.6-52 | Sam.6-53 | Sam.6-54 | Sam.6-55 | Sam.6-56 |
|---|---|---|---|---|---|---|---|---|---|---|
| Proportion of formulations | E-HFO-1132 | mass% | 35.0 | 35.0 | 45.0 | 45.0 | 45.0 | 55.0 | 55.0 | 55.0 |
| | R32 | mass% | 7.5 | 20.0 | 0.0 | 10.0 | 20.0 | 0.0 | 10.0 | 20.0 |
| | R152a | mass% | 50.1 | 37.6 | 47.6 | 37.6 | 27.6 | 37.6 | 27.6 | 17.6 |
| | CO2 | mass% | 7.4 | 7.4 | 7.4 | 7.4 | 7.4 | 7.4 | 7.4 | 7.4 |
| GWP (AR4) | | - | 113 | 182 | 60 | 115 | 170 | 47 | 102 | 157 |
| COP ratio (relative to R1234yf) | | % | 104 | 103 | 104 | 103 | 102 | 103 | 103 | 102 |
| Refrigerating capacity ratio (relative to R1234yf) | | % | 100 | 116 | 101 | 115 | 129 | 112 | 127 | 144 |
| Disproportionation reaction (5Mpa) | | - | - | - | Non-explosion | Non-explosion | Non-explosion | Explosion | Explosion | Explosion |

[Table 36]

| Item | | Unit | Ref.Ex. 3 | Sam.7-42 | Sam.7-43 | Sam.7-44 | Sam.7-45 | Sam.7-46 | Sam.7-47 | Sam.7-48 |
|---|---|---|---|---|---|---|---|---|---|---|
| Proportion of formulations | E-HFO-1132 | mass% | R404A | 5.0 | 5.0 | 5.0 | 20.0 | 20.0 | 20.0 | 35.0 |
| | R32 | mass% | | 0.0 | 5.0 | 15.0 | 0.0 | 7.5 | 15.0 | 0.0 |
| | R152a | mass% | | 85.0 | 80.0 | 70.0 | 70.0 | 62.5 | 55.0 | 55.0 |
| | HFO-1132a | mass% | | 10.0 | 10.0 | 10.0 | 100 | 10.0 | 10.0 | 10.0 |
| GWP (AR4) | | - | 3922 | 106 | 133 | 188 | 87 | 128 | 170 | 69 |
| COP ratio (relative to R1234yf) | | % | 100 | 104 | 104 | 104 | 105 | 104 | 104 | 104 |
| Refrigerating capacity ratio (relative to R1234yf) | | % | 100 | 68 | 72 | 82 | 82 | 90 | 99 | 97 |

| Item | | Unit | Sam.7-49 | Sam.7-50 | Sam.7-51 | Sam.7-52 | Sam.7-53 | Sam.7-54 | Sam.7-55 | Sam.7-56 |
|---|---|---|---|---|---|---|---|---|---|---|
| Proportion of formulations | E-HFO-1132 | mass% | 35.0 | 35.0 | 45.0 | 45.0 | 45.0 | 52.5 | 52.5 | 52.5 |
| | R32 | mass% | 7.5 | 20.0 | 0.0 | 10.0 | 20.0 | 0.0 | 10.0 | 20.0 |
| | R152a | mass% | 47.5 | 35.0 | 45.0 | 35.0 | 25.0 | 37.5 | 27.5 | 17.5 |
| | CO2 | mass% | 10.0 | 10.0 | 10.0 | 10.0 | 10.0 | 10.0 | 10.0 | 10.0 |
| GWP (AR4) | | - | 110 | 179 | 56 | 111 | 100 | 47 | 102 | 157 |
| COP ratio (relative to R1234yf) | | % | 103 | 102 | 103 | 102 | 102 | 103 | 102 | 101 |
| Refrigerating capacity ratio (relative to R1234yf) | | % | 106 | 122 | 107 | 121 | 136 | 115 | 130 | 148 |
| Disproportionation reaction (5Mpa) | | - | - | - | Non-explosion | Non-explosion | Non-explosion | Explosion | Explosion | Explosion |

68

The coordinates of each point were obtained by the least squares method as follows.

[Table 37]

| Point L | | | | | | | |
|---|---|---|---|---|---|---|---|
| a=CO2 | mass% | 0.0 | 2.5 | 5.9 | 5.9 | 7.4 | 10.0 |
| E-HFO-1132 | mass% | 16.9 | 12.8 | 7.1 | 7.1 | 4.6 | 0.5 |
| R32 | mass% | 8.5 | 8.1 | 7.6 | 7.6 | 7.4 | 7.0 |
| R152a | mass% | 74.6 | 76.6 | 79.4 | 79.4 | 80.6 | 82.5 |
| E-HFO-1132 Approximation formula | | $-1.6619a+16.92$ | | | $0.0219a^2-1.9578a+17.889$ | | |
| R32 Approximation formula | | $-0.1522a+8.4929$ | | | $-0.005a^2-0.0668a+8.1682$ | | |
| R152a Approximation formula | | $0.8141a+74.587$ | | | $-0.0169a^2+1.0246a+73.943$ | | |

| Point M | | | | | | | |
|---|---|---|---|---|---|---|---|
| a=CO2 | mass% | 0.0 | 2.5 | 5.9 | 5.9 | 7.4 | 10.0 |
| E-HFO-1132 | mass% | 25.9 | 21.2 | 14.9 | 14.9 | 12.2 | 7.6 |
| R32 | mass% | 0.0 | 0.0 | 0.0 | 0.0 | 0.0 | 0.0 |
| R152a | mass% | 74.1 | 76.3 | 79.2 | 79.2 | 80.4 | 82.4 |
| E-HFO-1132 Approximation formula | | $0.0046a^2-1.8915a+25.9$ | | | $0.0075a^2-1.8998a+25.848$ | | |
| R32 Approximation formula | | 0.0 | | | 0.0 | | |
| R152a Approximation formula | | $-0.0462a^2+0.8915a+74.1$ | | | $-0.0075a^2+0.8998a+74.152$ | | |

In the above-described embodiment, when the mass% of HFO-1132(E), R32, HFC-152a, and HFO-1132a in the refrigerant of the present disclosure based on their sum are respectively represented by x, y, z, and a (wherein $0 < a \leq 10.0$), in a ternary composition diagram in which the sum of HFO-1132(E), R32, and HFC-152a is (100-a) mass%, if coordinates (x,y,z) satisfy the following requirements, a disproportionation reaction does not occur at 5 MPa and 150°C, GWP is 150 or less, and a refrigerating capacity (Cap) ratio relative to R404A is 70% or more.

<Requirements>

The coordinates (x,y,z) are, when $0 < a \leq 5.9$, within the range of a figure surrounded by straight lines D'D, DL, LM, and MD' that connect the following 4 points:

    point D' (-a+58.3, 17.7, 24.0),
    point D (-a+57.0, 0.0, 43.0),
    point L (-1.6619a+16.92, -0.1522a+8.4929, 0.8141a+74.587), and
    point M ($0.0046a^2$-1.8915a+25.9, 0.0, - $0.0462a^2$+0.8915a+74.1), or

on the straight lines D'D, DL, LM, and MD', and

    when

$$5.9 < a \leq 10.0,$$

the coordinates (x,y,z) are within the range of a figure surrounded by straight lines D'D, DL, LM, and MD' that connect the following 4 points:

    point D' (-a+58.3, 17.7, 24.0),
    point D (-a+57.0, 0.0, 43.0),
    point L ($0.0219a^2$-1.9578a+17.889, -0.005$a^2$-0.0668a+8.1682, -0.0169$a^2$+1.0246a+73.943), and
    point M ($0.0075a^2$-1.8998a+25.848, 0.0, - 0.0075$a^2$+0.8998a+74.152), or

on the straight lines D'D, DL, LM, and MD'.

**Claims**

1. A composition comprising a refrigerant,
   wherein the refrigerant comprises trans-1,2-difluoroethylene (HFO-1132(E)), 1,1-difluoroethane (HFC-152a), and 1,1-difluoroethylene (HFO-1132a).

2. The composition according to claim 1,

   wherein the refrigerant optionally further comprises R32,
   when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
   coordinates (x,y,z) are, when $0 < a \leq 5.9$, within the range of a figure surrounded by straight lines CD, DO, OB, BA, and AC that connect the following 5 points:

   point C (-a+60.0, 40.0, 0.0),
   point D (-a+57.0, 0.0, 43.0),
   point O (0.0, 0.0, -a+100),
   point B (0.0, $0.006a^2$+0.185a+32.00, $-0.006a^2$-1.185a+68.00), and
   point A (-a+40.8, 59.2, 0.0), or

   on the straight lines CD, DO, and BA (excluding the points C, O, B, and A), and
   the coordinates (x,y,z) are, when $5.9 < a \leq 10.0$, within the range of a figure surrounded by straight lines CD, DO, OB, BA, and AC that connect the following 5 points:

   point C (-a+60.0, 40.0, 0.0),
   point D (-a+57.0, 0.0, 43.0),
   point O (0.0, 0.0, -a+100),
   point B (0.0, $-0.0019a^2$+0.225a+32.038, $0.0019a^2$-1.225a+67.962), and
   point A (-a+40.8, 59.2, 0.0), or

   on the straight lines CD, DO, and BA (excluding the points C, O, B, and A).

3. The composition according to claim 1,

   wherein when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
   coordinates (x,y,z) are, when $0 < a \leq 5.9$, within the range of a figure surrounded by straight lines CD, DE, EE', E'F, FB, BA and AC that connect the following 7 points:

   point C (-a+60.0, 40.0, 0.0)
   point D (-a+57.0, 0.0, 43.0),
   point E ($-0.0152a^2$-2.4021a+50.70, 0.0, $0.00152a^2$+1.4021a+49.30),
   point E' ($-0.0082a^2$-2.0196a+12.2, $0.0008a^2$-0.242a+34.7, $0.0074a^2$+1.2616a+53.1),
   point F (0.0, $-0.007a^2$-2.3826a+47.6, $0.007a^2$+1.3826a+52.4),
   point B (0.0, $0.006a^2$+0.185a+32.00, $-0.006a^2$-1.185a+68.00), and
   point A (-a+40.8, 59.2, 0.0), or

   on the straight lines CD, DE, EE', E'F, and BA (excluding the points C, F, B, and A), and
   the coordinates (x,y,z) are, when $5.9 < a \leq 10.0$, within the range of a figure surrounded by straight lines CD, DE, EF, FB, BA and AC that connect the following 6 points:

   point C (-a+60.0, 40.0, 0.0)
   point D (-a+57.0, 0.0, 43.0),

point E ($-0.0131a^2-2.4253a+50.767$, 0.0, $0.0131a^2+1.4253a+49.233$),
point F (0.0, $0.0081a^2-2.6415a+48.602$, $-0.0081a^2+1.6415a+51.398$),
point B (0.0, $-0.0019a^2+0.225a+32.038$, $0.0019a^2-1.225a+67.962$), and
point A ($-a+40.8$, 59.2, 0.0), or

on the straight lines CD, DE, EF, and BA (excluding the points C, F, B, and A).

4. The composition according to claim 1,

wherein when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 5.9$, within the range of a figure surrounded by straight lines CD, DE, EE', E'A', and A'C that connect the following 5 points:

point C ($-a+60.0$, 40.0, 0.0),
point D ($-a+57.0$, 0.0, 43.0),
point E ($-0.0152a^2-2.4021a+50.70$, 0.0, $0.00152a^2+1.4021a+49.30$),
point E' ($-0.0082a^2-2.0196a+12.2$, $0.0008a^2-0.242a+34.7$, $0.0074a^2+1.2616a+53.1$), and
point A' ($-a+55.6$, 44.4, 0.0), or

on the straight lines CD, DE, EE', and E'A' (excluding the points C and A'), and
the coordinates (x,y,z) are, when $5.9 < a \leq 10.0$, within the range of a figure surrounded by straight lines CD, DE, EF, FB', B'A', and A'C that connect the following 6 points:

point C ($-a+60.0$, 40.0, 0.0),
point D ($-a+57.0$, 0.0, 43.0),
point E ($-0.0131a^2-2.4253a+50.767$, 0.0, $0.00131a^2+1.4253a+49.233$),
point F (0.0, $0.0081a^2-2.6415a+48.602$, $-0.0081a^2+1.6415a+51.398$),
point B' (0.0. $-0.0137a^2+0.4304a+31.164$, $0.0137a^2-1.4304a+68.836$), and
point A' ($-a+55.6$, 44.4, 0.0), or

on the straight lines CD, DE, EF, and B'A' (excluding the points C, F, B', and A').

5. The composition according to claim 1,

wherein the refrigerant further comprises R32, and
when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 1.6$, within the range of a figure surrounded by straight lines D'D, DJ, JK, and KD' that connect the following 4 points:

point D' ($-a+58.3$, 17.7, 24.0),
point D ($-a+57.0$, 0.0, 43.0),
point J ($-17.625a+28.2$, 3.1875a, $13.438a+71.8$), and
point K ($-10.625a+19.2$, $5.625a+9.0$, $15.25a+71.8$), or

on the straight lines D'D, DJ, JK, and KD', and
the coordinates (x,y,z) are, when $1.6 < a \leq 1.7$, within the range of a figure surrounded by straight lines D'D, DJ, JK, and KD' that connect the following 4 points:

point D' ($-a+58.3$, 17.7, 24.0),
point D ($-a+57.0$, 0.0, 43.0),
point J ($-17.625a+28.2$, 3.1875a, $13.438a+71.8$), and
point K ($-22.0a+37.4$, 0.0, $21.0a+62.6$), or

on the straight lines D'D, DJ, JK, and KD', and

the coordinates (x,y,z) are, when $1.7 < a \leq 10.0$, within the range of a figure surrounded by straight lines D'D, DO, OB", and B"D' that connect the following 4 points:

point D' (-a+58.3, 17.7, 24.0),
point D (-a+57.0, 0.0, 43.0),
point O (0.0, 0.0, -a+100.0), and
point B" (0.0, $-0.0014a^2$-0.2396a+4.657, $0.0014a^2$-1.2396a+95.343), or

on the straight lines D'D, DO, and B"D' (excluding the points O and B").

6. The composition according to claim 1,

wherein the refrigerant further comprises HFO-1132a, and
when the mass% of HFO-1132(E), R32, HFC-152a, and HFO-1132a in the refrigerant based on their sum are respectively represented by x, y, z, and a (wherein $0 < a \leq 10.0$), in a ternary composition diagram in which the sum of HFO-1132(E), R32, and HFC-152a is (100-a) mass%,
coordinates (x,y,z) are, when $0 < a \leq 5.9$, within the range of a figure surrounded by straight lines D'D, DL, LM, and MD' that connect the following 4 points:

point D' (-a+58.3, 17.7, 24.0),
point D (-a+57.0, 0.0, 43.0)
point L (-1.6619a+16.92, -0.1522a+8.4929, 0.8141a+74.587), and
point M ($0.0046a^2$-1.8915a+25.9, 0.0, - $0.0462a^2$+0.8915a+74.1), or

on the straight lines D'D, DL, LM, and MD', and
the coordinates (x,y,z) are, when $5.9 < a \leq 10.0$, within the range of a figure surrounded by straight lines D'D, DL, LM, and MD' that connect the following 4 points:

point D' (-a+58.3, 17.7, 24.0),
point D (-a+57.0, 0.0, 43.0),
point L ($0.0219a^2$-1.9578a+17.889, $-0.005a^2$-0.0668a+8.1682, $-0.0169a^2$+1.0246a+73.943), and
point M ($0.0075a^2$-1.8998a+25.848, 0.0, - $0.0075a^2$+0.8998a+74.152), or

on the straight lines D'D, DL, LM, and MD'.

7. A refrigeration method comprising a step of operating a refrigeration cycle using the composition according to any one of claims 1 to 6.

8. A refrigeration apparatus comprising the composition according to any one of claims 1 to 6 as a working fluid.

9. A method for suppressing a disproportionation reaction of HFO-1132(E), comprising a step of operating a refrigeration cycle using the composition according to any one of claims 1 to 6.

10. Use of HFO-1123, R32, R152a, and HFO-1132a for suppressing a disproportionation reaction of HFO-1132(E), wherein the suppression of the disproportionation reaction is carried out by mixing HFO-1123, R32, R152a, HFO-1132a, and HFO-1132(E) at a mixing ratio of the composition according to any one of claims 1 to 6.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

HFO1132 (E)

——— TERNARY DIAGRAM (5.9%HFO-1132a)
---- DISPROPORTIONATION BORDER LINE
——— GWP150
——— 70%Cap.(relative to R404A)

R32

R152a

Fig. 16

Fig. 17

## INTERNATIONAL SEARCH REPORT

| | International application No. |
|---|---|
| | **PCT/JP2023/047346** |

**A. CLASSIFICATION OF SUBJECT MATTER**

*C09K 5/04*(2006.01)i; *F25B 1/00*(2006.01)i
FI: C09K5/04 F; F25B1/00 396Z

According to International Patent Classification (IPC) or to both national classification and IPC

**B. FIELDS SEARCHED**

Minimum documentation searched (classification system followed by classification symbols)

C09K5/04; F25B1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2015-229768 A (ASAHI GLASS CO., LTD.) 21 December 2015 (2015-12-21)<br>claims, examples | 1-10 |
| A | JP 2015-229767 A (ASAHI GLASS CO., LTD.) 21 December 2015 (2015-12-21)<br>claims, examples | 1-10 |
| A | WO 2022/075389 A1 (DAIKIN INDUSTRIES, LTD.) 14 April 2022 (2022-04-14)<br>claims, examples | 1-10 |
| A | WO 2022/163830 A1 (DAIKIN INDUSTRIES, LTD.) 04 August 2022 (2022-08-04)<br>claims, examples | 1-10 |
| A | WO 2014/178353 A1 (ASAHI GLASS CO., LTD.) 06 November 2014 (2014-11-06)<br>claims, examples | 1-10 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/047346**

| Patent document cited in search report | | | Publication date (day/month/year) | Patent family member(s) | | | Publication date (day/month/year) |
|---|---|---|---|---|---|---|---|
| JP | 2015-229768 | A | 21 December 2015 | (Family: none) | | | |
| JP | 2015-229767 | A | 21 December 2015 | (Family: none) | | | |
| WO | 2022/075389 | A1 | 14 April 2022 | US | 2023/0242801 | A1 | |
| | | | | claims, examples | | | |
| | | | | EP | 4227390 | A1 | |
| | | | | CN | 116568774 | A | |
| WO | 2022/163830 | A1 | 04 August 2022 | US | 2023/0110292 | A1 | |
| | | | | claims, examples | | | |
| | | | | EP | 4286769 | A1 | |
| | | | | CN | 116867874 | A | |
| WO | 2014/178353 | A1 | 06 November 2014 | US | 2015/0376486 | A1 | |
| | | | | claims, examples | | | |
| | | | | EP | 2993212 | A1 | |
| | | | | CN | 105164228 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2015141678 A